# EUROPEAN PATENT APPLICATION

(11) **EP 3 667 494 A1**
(43) Date of publication of application: **17.06.2020**
(21) Application number: 18212758.9
(22) Date of filing: 14.12.2018
(51) Int. Cl.: G06F 9/48, G06F 9/50

(54) **INSTRUCTION ALLOCATION AND PROCESSING SYSTEM AND METHOD**

(71) Applicant: Lendinvest Limited, London W1T 3JJ (GB)
(72) Inventor: THOMAS, Ian Edward, London, W1T 3JJ (GB)
(74) Representative: Ahmad, Sheikh Shakeel

(57) **Abstract**

A dynamic instruction processing system for processing and allocating instructions continuously in real time, wherein the system is arranged to receive instructions from a remote instruction source and each instruction comprises a set of variable parameters which at least determine a task action to be processed and a data set upon which the task action operates, the dynamic instruction processing system including an instruction allocation engine for allocating a received instruction to one of a plurality of processing systems operatively coupled to the dynamic instruction processing system, the instruction allocation engine being adaptive to a state of each processing system to determine how many processing systems are available to comprise the plurality of processing systems which are available for allocation of the instruction, the instruction allocation engine comprising: a predictive system state processor operatively coupled to the plurality of processing systems, the predictive state processor being arranged to: continuously monitor in real time the current status of each of a plurality of existing instructions previously allocated to and being processed by the plurality of processing systems to determine when any change of status has occurred; carry out an allocation calculation to determine an appropriate processing system of the plurality of processing systems to allocate the received instruction to, based on at least one of the set of variable parameters of the received instruction, the current status of the plurality of existing instructions and the state of each processing system; and calculate a reallocation of one of the plurality of existing instructions which has not been fully executed to another one of the plurality of processing systems based on at least one of the set of variable parameters of the one of the plurality of existing instructions upon determination that one of a group of reallocation events has occurred, the group of reallocation events comprising: a new instruction has been received by the instruction allocation engine; an update to one of the set of variable parameters of any one of the plurality of existing instructions has been received by the instruction allocation engine from the remote instruction sources, the update changing one of the set of variable parameters of any one of the plurality of existing instructions; and the state of one or more of the plurality of processing has changed or the number of available processing systems of the plurality of processing systems currently available to the instruction allocation engine for allocation has changed; a reallocation engine configured to receive commands from the predictive system state processor to reallocate one or more existing instructions and to instruct the reallocation of the existing instructions between different ones of the plurality of processing systems; and an instruction processing module arranged to receive new instructions from the remote instruction source, where the instruction processing module is operatively coupled to the predictive system state processor and upon receipt of an instruction is configured to request an allocation calculation of a received instruction from the predictive system state processor and to allocate the received instruction to one of the plurality of processing systems in accordance with the allocation calculation received from the predictive system state processor.

## Description

### Field of the Invention

The present invention concerns an instruction processing system which comprises a predictive instruction processing system and a plurality of associated processing systems which are typically independent of the predictive instruction processing system. More specifically, although not exclusively, the present invention is applicable to applications in which the instructions comprise a plurality of task types and partial information regarding the task to be processed is available ahead of the instruction being transmitted for processing.

### Background of the Invention

Modern processing systems are often designed to receive instructions from a plurality of sources, where these sources are often located remotely from the processing system. It is also typical that these sources are numerous in nature and that each of the numerous sources may each provide a plurality of instructions. This quickly leads to a massive amount of instructions needing to be processed by the processing system. The processing system will often be provided with a plurality of processors and associated memory resources in order to process these numerous instructions in an efficient and timely manner. The instructions are typically comprised of tasks to be processed and the task type may vary from instruction to instruction. For instance, some of the tasks may comprise the utilisation of an image recognition algorithm in order to identify faces in a photograph. Other tasks may comprise a complex numerical calculation or the production of closed captions through aural analysis of an audio file. It is typical that some processors will be configured to be more adept at processing particular task types than others, and that whilst a generic non-specialised instruction may be executed by any processor in the processing system, certain instructions may need to be processed by an appropriately configured processor. If instructions are not routed to the most appropriate processor, then the instruction may be processed inefficiently or in some cases, may be processed incorrectly leading to the instruction needing to be processed again.

Typically, in present systems the sources of instructions may be configured to send the instructions to a queuing system which is coupled to a plurality of processors. The queuing system then allocates the instructions to the next available processor which has processing resource capacity to process the instruction. These queuing systems may also in some circumstances be configured to determine which of the processors is able to most efficiently process the particular task that the instruction relates to (i.e. which processors are configured to perform image analysis, speech recognition etc). This approach has significant drawbacks however. In particular, this approach relies on instructions first being provided and then being queued and subsequently assigned once a processor becomes available to execute the task, namely each instruction is considered sequentially in order of receipt to the queue regardless of state of the processing system. In scenarios where thousands or tens of thousands of instructions are received into the queue, this can lead to a significant delay in the processing of the instruction, and instructions which may otherwise be processed very quickly (in the order of minutes), may take several hours to be completed.

Furthermore, even where a queueing system may be arranged to preferentially allocate instructions based on their expected duration (i.e. processing a small task in preference to a larger task), there is still a reliance on processing resource being available. Since these systems are **reactive** to instructions being sent for processing, it is possible that delays are still introduced. For example, if a single large instruction is received for processing and is allocated prior to a smaller instruction being received, that small instruction may end up being delayed due to the processing resource being utilised in the execution of the larger instruction. Even in cases where a single processor may be multi-threaded and able to process multiple tasks at once, the reactive nature of these systems means that system memory can be incorrectly managed and instructions will need to be held in a queue before they can be processed, even where those tasks are small in nature.

In addition, even where there is a surplus of processing resource available to process all instructions which need to be allocated at a particular time, there may still be inefficiency introduced as a result of suboptimal allocation over a period of time. Once an instruction has been initially allocated, it is possible that the parameters of the instruction or of the processors may change as the processing of the instruction proceeds. The parameters may mean that, were the allocation of the instruction to have been initially performed with these changed parameters, the instruction may have been allocated elsewhere and consequently that the present allocation is not optimal in light of the present parameters. As a result, the instruction may be processed inefficiently or incorrectly, or it may mean that additional instructions which could be processed are delayed due to wasted processing resource.

Even in cases where instructions may be reallocated in accordance with an update in parameters, there are still drawbacks to these types of systems as well. These systems are still reactive and are dependent upon the receipt of an instruction before a presently running instruction may be switched between one processor to another. This naturally introduces a delay in processing the received instruction as the system takes time to determine which instructions may need to be switched and to where. Furthermore, this calculation and transfer will be performed for each new instruction in series. This means that the delay will be introduced for **each** received instruction where the transfer of a currently processing instruction is required. Where the system receives thousands or tens of thousands of instructions in a short time frame, the total delay can become quite substantial, particularly for those instructions which have been received later on, which will be impacted by the transfer delay of all prior instructions.

The present invention has been devised against this backdrop and seeks to obviate at least some of the above-described problems with existing systems.

### Summary of the Invention

According to one aspect of the present invention there is provided a dynamic instruction processing system for processing and allocating instructions continuously in real time, wherein the system is arranged to receive instructions from a remote instruction source and each instruction comprises a set of variable parameters which at least determine a task action to be processed and a data set upon which the task action operates, the dynamic instruction processing system including an instruction allocation engine for allocating a received instruction to one of a plurality of processing systems operatively coupled to the dynamic instruction processing system, the instruction allocation engine being adaptive to a state of each processing system to determine how many processing systems are available to comprise the plurality of processing systems which are available for allocation of the instruction, the instruction allocation engine comprising: a predictive system state processor operatively coupled to the plurality of processing systems, the predictive state processor being arranged to: continuously monitor in real time the current status of each of a plurality of existing instructions previously allocated to and being processed by the plurality of processing systems to determine when any change of status has occurred; carry out an allocation calculation to determine an appropriate processing system of the plurality of processing systems to allocate the received instruction to, based on at least one of the set of variable parameters of the received instruction, the current status of the plurality of existing instructions and the state of each processing system; and calculate a reallocation of one of the plurality of existing instructions which has not been fully executed to another one of the plurality of processing systems based on at least one of the set of variable parameters of the one of the plurality of existing instructions upon determination that one of a group of reallocation events has occurred, the group of reallocation events comprising: a new instruction has been received by the instruction allocation engine; an update to one of the set of variable parameters of any one of the plurality of existing instructions has been received by the instruction allocation engine from the remote instruction sources, the update changing one of the set of variable parameters of any one of the plurality of existing instructions; and the state of one or more of the plurality of processing has changed or the number of available processing systems of the plurality of processing systems currently available to the instruction allocation engine for allocation has changed; a reallocation engine configured to receive commands from the predictive system state processor to reallocate one or more existing instructions and to instruct the reallocation of the existing instructions between different ones of the plurality of processing systems; and an instruction processing module arranged to receive new instructions from the remote instruction source, where the instruction processing module is operatively coupled to the predictive system state processor and upon receipt of an instruction is configured to request an allocation calculation of a received instruction from the predictive system state processor and to allocate the received instruction to one of the plurality of processing systems in accordance with the allocation calculation received from the predictive system state processor.

In this way the present invention solves at least one of the problems of the prior art outlined above. It is possible with the present invention to consider the requirements of existing instructions which are presently being processed when allocating a new instruction to be processed. In particular, the invention allows existing instructions to be reallocated upon receipt of a new instruction in order to maintain an optimal allocation of all instructions being processed. Furthermore, the present invention also allows for the status of existing instructions to be monitored in real time, such that when the existing instructions are updated or when the state or number of the processing systems is changed, the existing instructions can be reallocated in order to maintain optimal allocation of all instructions being processed. In this way, the present invention is able to mitigate the possibility of instructions needing to be queued to await processing due to inefficient allocation of the instruction across available processing systems. Furthermore, the present invention also mitigates the possibility that an instruction will be processed by a processing system which is not optimally configured to perform such a processing of the instruction.

In some embodiments of the present invention described herein, the instruction processing module further comprises an instruction processing queue, and the predictive system state processor is configured to carry out an allocation calculation and forward results of the allocation calculation to the instruction processing module, the allocation calculation determining an appropriate processing system of the plurality of processing systems to allocate the received instruction to and an appropriate time at which the received instruction should be allocated, and the instruction processing module is arranged to store the received instruction in the instruction processing queue until it is to be allocated in accordance with the results of the allocation calculation. In this way, this embodiment is also able to delay the start of the processing of a received instruction if it is determined that an optimal overall allocation of all instructions being processed requires that the received instruction should initiate processing at a later time. Furthermore, in some arrangements of this embodiment, the instruction processing module is arranged to receive an update to one of the set of variable parameters of an instruction awaiting allocation in the instruction processing queue and upon receipt of the update, the instruction processing module is configured to request an allocation calculation of the updated instruction in accordance with the updated variable parameter.

In further embodiments of the present invention the reallocation engine is further configured to receive notifications from two or more processing systems between which the reallocation of one or more existing instructions is to be enacted, indicating whether the reallocation of the one or more existing instructions is possible currently and if the reallocation is not possible currently, the reallocation engine is configured to introduce a delay in the reallocation until such time as the reallocation is possible.

In some embodiments of the present invention the predictive system state processor is configured to determine from the set of variable parameters whether a received instruction or one of the plurality of existing instructions can be split into a plurality of discrete tasks and where the received instruction or one of the plurality of existing instructions can be split, the predictive system state processor is configured to carry out an allocation calculation or a reallocation calculation respectively for each of the plurality of discrete tasks. In this way, this embodiment is able to further optimise the allocation of a particular instruction (existing or new) by splitting the instruction into tasks that may be performed by separate processing systems, rather than requiring that each task of the instruction be performed by the same processing system, and where each of the tasks may be processed simultaneously by the different processing systems.

In some embodiments of the present invention, the predictive system state processor is arranged to carry out the allocation calculation and the reallocation calculation using a minimisation algorithm, the minimisation algorithm operating, in use, to allocate the received instruction and reallocate the one of the existing instructions to processing systems to minimise the total amount of processing resource consumed in processing the received instruction and the plurality of existing instructions

In further embodiments of the present invention, the dynamic instruction processing system further comprises a pre-allocation parameter calculation processor operatively coupled to the instruction allocation engine, the pre-allocation parameter calculation processor comprising: a processed instruction notification processor configured to receive instruction notifications from the remote instruction source prior to the receipt of corresponding instructions, where each instruction notification comprises a set of variable parameters and static parameters, with one of the static parameters comprising an instruction notification record identifier; and a parameter creation processor arranged to calculate, using at least one of the variable parameters or the static parameters, a set of pre-allocation parameters for the received instruction notification which at least determine an expected task action to be processed, an expected data set upon which the task action operates and an expected time of receipt of the instruction to which the instruction notification relates; and a database configured to store information records; wherein upon receipt of the pre-allocation parameters, the predictive system state processor is arranged to: create a notional instruction and to carry out a pre-allocation calculation using the pre-allocation parameters to determine an appropriate processing system of the plurality of processing systems to allocate a notional instruction to, and an appropriate time at which the notional instruction should be allocated; and store information records relating to the allocation status of notional instructions in the database provided; and the instruction processing module arranged, upon receipt of a new instruction from the remote instruction source, to request information relating to the allocation status of notional instructions and to compare an identifier of the new instruction with previously received instruction notification identifiers of the notional instructions; and if a corresponding pre-allocated notional instruction has been received, to allocate the received instruction to one of the plurality of processing systems in accordance with the allocation of the notional instruction.

In this way, the present embodiment is able to receive an advance notification that an instruction is to be expected in the future, and the expected (or notional) instruction can be pre-allocated to a processing system. Then when the corresponding instruction is received, it can be allocated in accordance with this calculated pre-allocation. This presents the advantage that when an instruction is received, it can be immediately allocated without requiring that an allocation calculation be performed. This minimises the waiting time that needs to be introduced between an instruction being received and the instruction being allocated, which is particularly advantageous where a very large number of instructions are being received and processed simultaneously.

In further arrangements of the above embodiment, the pre-allocation processor further comprises a data store arranged to store parameters relating to the allocation of notional instructions which have been allocated; and store parameters relating to the processing of the instructions to which the notional instructions correspond, where the parameters are provided by the instruction allocation engine; and an information collection processor arranged to operate with the parameter creation processor to access and use the parameters stored in the data store relating to the allocation of notional instructions which have been allocated and the parameters stored in the data store relating to the processing of the instructions to which the notional instructions correspond, when performing the calculation of pre-allocation parameters of a received instruction notification. In this way, the pre-allocation processor is able to take into consideration the pre-allocation of previous notional instructions and the allocation of the instructions to which they relate in order to provide more accurate pre-allocation parameters to be used in the pre-allocation calculation of the received instruction notification.

In embodiments of the present invention which include a supplementary update processor and a parameter creation procession, the supplementary update processor is arranged to operate with the parameter creation processor to access and use the parameters stored in the data store relating to the allocation of notional instructions which have been allocated and the parameters stored in the data store relating to the processing of the instructions to which the notional instructions correspond, when performing the calculation of pre-allocation parameters of an updated instruction notification.

In yet further embodiments of the present invention which at least comprise a pre-allocation parameter calculation processor, the group of reallocation events further comprises an update to one of the set of variable parameters of one of the existing instruction notifications has been received by the pre-allocation parameter calculation processor from the remote instruction sources, the update changing one of the set of variable parameters of the existing instruction notification.

In further embodiments of the present invention which at least comprise a pre-allocation parameter calculation processor, the predictive system state processor is additionally arranged to reallocate any pre-allocated notional instruction which have previously been pre-allocated upon determination that one of the group of reallocation events has occurred.

In further embodiments of the present invention, the dynamic instruction processing system further comprises the plurality of processing systems.

According to another aspect of the present invention, there is provided a method of processing and allocating instructions received from a remote instruction source continuously in real time, wherein each instruction comprises a set of variable parameters which at least determine a task action to be processed and a data set upon which the task action operates, the method including using a plurality of processing systems to process the instructions, the method comprising initiating an allocation calculation upon receipt of an instruction; calculating, based on at least one of the set of variable parameters of the instruction, the current status of any existing instructions and the state of each processing system, an appropriate processing system of the plurality of processing systems to allocate the received instruction to; allocating the received instruction to a processing system of the plurality of processing systems in accordance with the determined allocation; processing the received instruction in accordance with the provided set of variable parameters; receiving the results of the processed instruction; and providing the results of the processed instruction to the remote instruction source. The processing step comprises initialising the processing of the received instruction when it is allocated to a processing system; monitoring in real time the current status of each of a plurality of existing instructions previously allocated to and being processed by the plurality of processing systems to determine when any change of status has occurred; calculating a reallocation of one or more of the plurality of existing instructions which has not been fully executed to another one of the plurality of processing systems based on the set of variable parameters of the plurality of existing instructions upon determination that one of a group of reallocation events has occurred; reallocating the one or more of the plurality of existing instructions to another processing system in accordance with the results of the reallocation calculation; and repeating the monitoring, calculating and reallocating steps until the processing of the received instruction has been completed. The group of relocation events comprises: a new instruction has been received from a remote instruction source; an update to one of the set of variable parameters of one of the plurality of existing instructions has been received from the remote instruction sources, the update changing one of the set of variable parameters of any one of the plurality of existing instructions; and the state of one or more of the plurality of processing systems has changed or the number of available processing systems of the plurality of processing systems currently available for allocation has changed. The advantages of this aspect are similar to those recited in respect of the first aspect of this invention.

In a further embodiment of this aspect of the invention, the method further comprises receiving an instruction notification prior to the receipt of a corresponding instruction, where each instruction notification comprises a set of variable parameters and static parameters, wherein one of the static parameters comprises an instruction notification record identifier; calculating using at least one of the variable parameters or the static parameters, a set of pre-allocation parameters for the received instruction notification which at least determine an expected task action to be processed, an expected data set upon which the task action operates and an expected time of receipt of the instruction to which the instruction notification relates; creating a notional instruction in respect of the instruction notification; calculating, based on the set of pre-allocation parameters of the notional instruction, the current status of any existing instructions and notional instructions, and the state of each processing system, an appropriate processing system of the plurality of processing systems to allocate the notional instruction to; storing information records relating to the allocation status of the notional instructions; and allocating a received instruction to a processing system of the plurality of processing systems in accordance with the stored determined allocation of the notional instruction to which the instruction relates.

The above described features of the embodiments are combinable in different ways and can be added to the following specific description of the embodiments of the present invention if not specifically described therein.

### Brief Description of the Drawings

In order that the invention may be more readily understood, reference will now be made, by way of example, to the accompanying drawings in which:
Figure 1 is a schematic block diagram, illustrating a predictive instruction processing system, in accordance with an embodiment of the present invention in combination with a plurality of remote instruction sources, and also a plurality of processors and respective memory devices that form part of a processing and memory resource pool which carry out instructions that have been allocated by the predictive instruction processing system;
Figure 2 is a schematic block diagram, showing an example of a remote instruction source of Figure 1 which provides instructions to the predictive instruction processing system of Figure 1;
Figure 3 is a schematic block diagram, showing in greater detail the predictive instruction processing system of Figure 1 for predicting when an instruction will be requested to be processed and estimating the resource the system will require in order to efficiently allocate the instruction to the processing and memory resource pool once it is received;
Figure 4A is a schematic block diagram, showing an example of an instruction notification record data structure provided by the remote instruction source of Figure 2, which is used by the system shown in Figure 3 for creating an instruction notification;
Figure 4B is a schematic block diagram, showing an example of an instruction record data structure after it has been provided with further information relating to the instruction by the remote instruction source of Figure 2;
Figure 5A is a flow diagram, showing a method of receiving an instruction notification, pre-allocating the instruction to which it relates to a suitable processor and memory resource in a processing and memory resource pool by the predictive instruction processing system of Figure 3;
Figure 5B is a flow diagram, showing a method of receiving updated information relating to an existing instruction notification and performing a re-allocation of instructions and instruction notifications by the predictive instruction processing system of Figure 3 in accordance with the updated information;
Figure 5C is a flow diagram, showing a method of receiving updated information relating to an existing instruction and performing a re-allocation of instructions and instruction notifications by the predictive instruction processing system of Figure 3 in accordance with the updated information;
Figure 5D is a flow diagram, showing a method of receiving an instruction from a remote instruction source of Figure 2 and allocating the instruction to a suitable processor and memory resource in a processing and memory resource pool by the predictive instruction processing system of Figure 3, in accordance with any pre-allocation associated with that instruction;
Figure 6 is a schematic block diagram, showing a pre-allocation parameter calculation processor of the predictive instruction processing system of Figure 3;
Figure 7A is a flow diagram, showing a method of calculating pre-allocation parameters for a newly received instruction notification by the pre-allocation parameter calculation processor of Figure 5;
Figure 7B is a flow diagram, showing a method of calculating pre-allocation parameters for an update to a previously received instruction notification by the pre-allocation parameter calculation processor of Figure 5;
Figure 8 is a schematic block diagram, showing an instruction allocation engine of the predictive instruction processing system of Figure 3;
Figure 9A is a flow diagram, showing a method of operation of the instruction allocation engine system of Figure 7 when receiving pre-allocation parameters;
Figure 9B is a flow diagram, showing a method of operation of the instruction allocation engine system of Figure 7 for persistent monitoring of the allocation state of received instructions;
Figure 10 is a schematic block diagram, showing an instruction processing module of the instruction allocation engine of Figure 8;
Figure 11 is a flow diagram, showing a method of operation of the instruction processing module of Figure 10;
Figure 12 is a schematic block diagram, showing an allocation recalculation processor of the predictive instruction processing system of Figure 3; and
Figure 13 is a flow diagram, showing a method of calculating allocation parameters for an instruction currently in progress, by the allocation recalculation processor of Figure 11.

### Detailed Description of Example Embodiments

Specific embodiments are now described with reference to the appended figures.

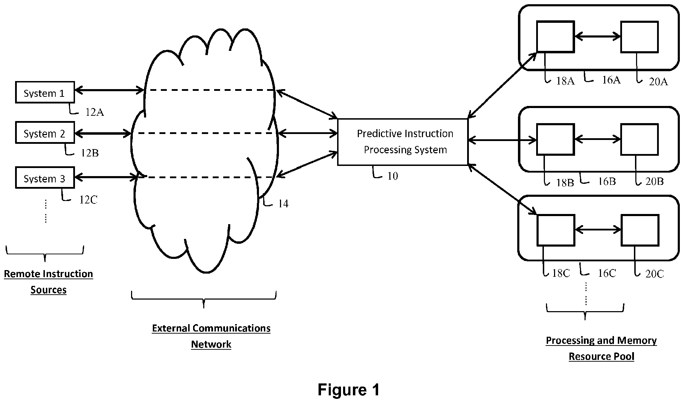

Turning firstly to Figure 1, there is shown a use scenario for a predictive instruction processing system (PIPS) 10 according to an embodiment of the present invention, which is configured to receive instructions from one or more remote instruction systems 12A, 12B, 12C located remotely from the PIPS 10. The PIPS 10 forms part of an instruction processing system which is comprised of the combination of the PIPS 10 and a processing and memory resource pool made up of a plurality of processing systems 16A, 16B, 16C. Each of the processing systems 16A, 16B, 16C comprises a processor 18A, 18B, 18C and an associated memory resource 20A, 20B, 20C. It is to be appreciated that whilst three remote instruction systems 12A, 12B, 12C and three processing systems 16A, 16B, 16C are shown in Figure 1, this is for illustrative purposes only and any number of remote instruction systems 12A, 12B, 12C and processing systems 16A, 16B, 16C can be used with the present embodiment. In the case of the processing systems 16A, 16B, 16C, there will always be at least two such processing systems. This is so the PIPS 10 is provided with a plurality of processing systems 16A, 16B, 16C which an instruction may be allocated to. The instructions typically comprise one or more tasks to be completed by a processor in connection with an associated memory. The instructions typically contain sufficient information for the processing system 16A, 16B, 16C to complete the task based on the information. The tasks will also typically be finite in nature rather than comprising a persistent process which is performed indefinitely. Once an instruction has been fully processed, the outcome of the processed instruction may then be returned to the remote instruction system 12A, 12B, 12C which instructed it. In certain embodiments, the PIPS 10 may also be configured such that a remote instruction source 12A, 12B, 12C may request the progress of the processing of the instruction. This may include determining whether a processing system 16A, 16B, 16C has begun processing the instruction as well as how much of the instruction has been processed (current status).

The tasks which form an instruction may comprise one of a plurality of task types (for instance, image recognition, audio file manipulation, mathematical model calculation etc). In some embodiments, certain processing systems 16A, 16B, 16C may be configured such that they are only able to process certain task types. In such embodiments, when the PIPS 10 determines which processing system 16A, 16B, 16C to allocate an instruction to, the PIPS 10 will exclude those processing systems which are unable to process the task type of the instruction. Alternatively in some embodiments, whilst it may be possible to process all task types on each processing system 16A, 16B, 16C, certain processing systems 16A, 16B, 16C may be more efficient at processing certain task types than others. In these embodiments, the relative efficiency level of each processing system 16A 16B, 16C may be taken into account by the PIPS 10 when assigning the instruction to a processing system 16A, 16B, 16C.

In addition to allocating an instruction based on the abilities of the processing systems 16A, 16B, 16C, the PIPS 10 may additionally allocate a received instruction based on the number and type of other instructions which have previously been received and are awaiting processing, or based on the number and type of instructions which are presently being processed by a processing system 16A, 16B, 16C. In some embodiments, the PIPS 10 may receive a plurality of instructions in parallel and some of these instructions may be placed in a queue whilst they await processing. In these embodiments, when it is decided where an instruction is to be allocated, the PIPS 10 may additionally consider the instructions residing in the queue in order to determine the most appropriate processing system 16A, 16B, 16C to allocate the present instruction to. Similarly, the PIPS 10 may also consider the instructions that are presently being processed by the processing systems 16A, 16B, 16C to determine the most appropriate processing system 16A, 16B, 16C to allocate the present instruction to. In other words, the allocation of a present instruction can take into consideration not only availability of current processing resource but also future demand for that processing resource as determined by instructions waiting to be allocated. In this regard, the system can be considered to be a type of sophisticated predictive load balancer for instruction processing.

Restricting which processing systems 16A, 16B, 16C may be allocated to, based on the configuration of the processing system 16A, 16B, 16C may be advantageous in processing a particular instruction efficiently. If an instruction is processed by a processing system 16A, 16B, 16C which is not appropriately configured, it may lead to an inaccurate result or may lead to processing times which are longer than may be achieved by another processor. By configuring the PIPS 10 such that each instruction is appropriately allocated, a greater processing efficiency for each individual instruction is achieved. Furthermore, consideration of other instructions which have been sent to the PIPS 10 (whether they are awaiting processing or are currently being processed) when allocating a present instruction also confers an advantage on the present system. There are typically instances in known systems where a first instruction awaiting processing is sent to be processed by a particular processing system and as a result, there is insufficient processing resource to process other instructions. By considering all instructions, the PIPS 10 is able to more efficiently allocate the instructions to be processed to maximise the amount of instructions being processed simultaneously and to also minimise the amount of time each instruction spends in a queue.

Returning to the embodiment of Figure 1, prior to an instruction being received by the PIPS 10 of Figure 1, it is typically expected that the PIPS 10 will also receive an instruction notification from a remote instruction system 12A, 12B, 12C. This instruction notification provides the PIPS 10 with an advance warning that an instruction which requires processing is to be expected at some time in the future. Such an instruction notification typically comprises sufficient information to determine the type and amount of processing resource required to process the instruction (to be received) such that the PIPS 10 is able to make an initial pre-allocation of the expected instruction to an appropriate processing system 16A, 16B, 16C but will not contain sufficient information to allow the instruction to be processed by the processing system 16A, 16B, 16C. Non-exhaustive examples of information contained in an instruction notification may include the source of the instruction notification, the type of task that the instruction will comprise, the expected time of provision of the full instruction as well as additional parameters which enable the PIPS 10 to make a pre-allocation (scheduled allocation) of the expected instruction to a specific processing resource. Then, once the instruction relating to the instruction notification is received, the PIPS 10 retrieves the pre-allocation assigned to the instruction and allocates the instruction in accordance with the pre-allocation.

In some embodiments, after an instruction notification is provided to the PIPS 10 by a remote instruction source 12A, 12B, 12C, the remote instruction source 12A, 12B, 12C may then subsequently provide further information (an update) relating to the instruction notification, prior to the instruction itself being sent. This may be performed when some information which was initially sent has now been amended, or may be used to supply further information which was unavailable when the instruction notification was initially sent (such as an expected amount of data to be processed in a particular task). In so doing, this prevents the need for a new instruction notification to be sent in order to amend the previously existing instruction notification record.

In further embodiments, after an instruction notification is provided to the PIPS 10 by a remote instruction source 12A, 12B, 12C, the remote instruction source 12A, 12B, 12C may then subsequently decide that the instruction, to which the instruction notification relates, is no longer expected to be instructed, namely that it is to be cancelled. In this instance, the remote instruction source 12A, 12B, 12C may then send further information to the PIPS 10 indicating that the pre-allocation assigned to the existing instruction notification should be removed.

Pre-allocating an instruction to a processing system 16A, 16B, 16C in advance of the full instruction being received confers a particular advantage on the present system. It is common for a situation to arise wherein it is known that an instruction will need to be processed prior to all information being known in relation to that instruction (i.e. before all data has been received by the remote instruction source 12A, 12B, 12C). In presently known systems, it is necessary to wait for all information regarding an instruction to be obtained before an allocation can be performed by an appropriate system. When the prior art allocation system receives a high volume of instructions, this can lead to a significant delay in instructions being processed, since an allocation calculation will need to be performed sequentially for each instruction before it can be processed, with each calculation needing to be performed with no prior information. The PIPS 10 of Figure 1 is able to perform an initial allocation (create a pre-allocation) of an instruction prior to the instruction being received and in so doing advantageously minimises the amount of waiting time between the instruction being received and the instruction being allocated to a processing system 16A, 16B, 16C. Also such a pre-allocation provides a placeholder for processing resource usage in the future and enables more efficient use of resources when considering the system as a whole.

In embodiments where the PIPS 10 pre-allocates an instruction upon receipt of an instruction notification, this pre-allocation is calculated on the basis of information parameters provided in the instruction notification, such as, but not limited to, the type of task that the instruction will comprise and the expected time of provision of the full instruction. This helps to enable the PIPS 10 to determine which processors are most efficiently able to deal with the future instruction as well as determining the expected availability of each processor at the expected time of delivery of the instruction. In addition, the PIPS 10 may also be configured to reference historical information related to the instruction notification which can be used to predict additional information regarding the expected instruction which has not been provided in the instruction notification. This may include the amount of data expected to be processed in a particular task, the estimated time that it will take to process an instruction and the expected likelihood that an instruction may be cancelled prior to transmission from the remote instruction source 10A, 10B, 10C. This additional historical data may be used to provide a pre-allocation which more efficiently allocates instructions upon receipt of the full instruction.

Returning to Figure 1, when the PIPS 10 performs an allocation or a pre-allocation of an instruction or instruction notification respectively, the PIPS 10 may additionally re-allocate existing instructions relating to different requests which have already been allocated or pre-allocated. This may be desirable in situations where the provision of a new instruction or instruction notification leads the PIPS 10 to determine that the most efficient allocation of all known instructions or instruction notifications requires that the existing state of the system be altered. This inclusion allows the PIPS 10 to be an adaptable system which is able to react in real-time to new instructions or instruction notifications and to maintain an optimal arrangement of allocations to enable maximal efficiency of use of the processing systems 16A, 16B, 16C.

The PIPS 10 may also be configured to receive updates from the processing systems 16A, 16B, 16C regarding the status of instructions that are currently being processed. Such updates may include where the instructions being processed encounter errors or when an instruction has been fully processed (either in accordance with the expected completion time or otherwise). These updates may then be used to re-allocate instructions which have already been allocated or pre-allocated. In some scenarios, this may comprise notifying the PIPS 10 that an instruction which is being processed in the processing system 16A, 16B, 16C is to be removed (either due to completion of the instruction or due to a processing error) and updating the allocations and pre-allocations in accordance with the newly available processing resource.

The instruction generation sources 12A, 12B, 12C are typically configured to transmit their instructions to the PIPS 10 via an external communications network 14, where the instruction generation sources 12A, 12B, 12C are located remotely from the PIPS 10. Such an external communications network 14 may comprise any network capable of supporting suitable wireless or wired communication methods. In some embodiments, the instruction generation sources 12A, 12B, 12C may be located proximately to the PIPS 10 and in these examples, the instruction generation sources 12A, 12B, 12C may be directly communicably coupled to the PIPS 10 without the need for an external communications network 14. Similarly, the processing systems 16A, 16B, 16C that form the processing and memory resource pool may also may also be configured to be located either remotely from, or proximately to, the PIPS 10. Where the processing systems 16A, 16B, 16C are located proximate the PIPS 10, the processing systems 16A, 16B, 16C may be communicably coupled to the PIPS 10. Where the processing systems 16A, 16B, 16C are located remotely to the PIPS 10, the processing systems 16A, 16B, 16C may be configured to receive tasks to be processed and to transmit the results of the tasks from/to the PIPS 10 via an external communications network (not shown) but which could be similar to the communications network 14 described above.

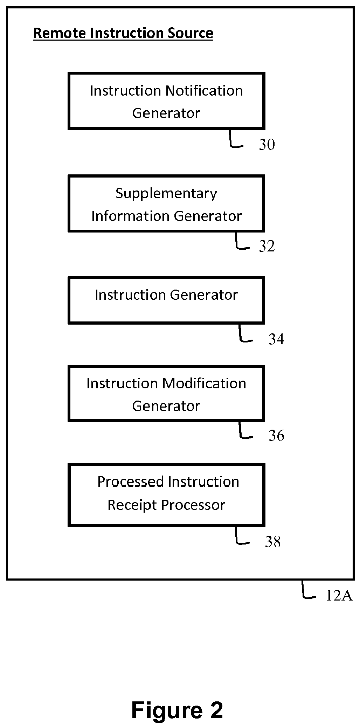

Referring now to Figure 2, an example of a remote instruction source 12A of Figure 1 is shown in more detail. Specifically, Figure 2 illustrates the various elements of an example remote instruction source 12A, 12B, 12C which is envisaged as being used in conjunction with the PIPS 10 of Figure 1 to enable each aspect of the functionality of the PIPS 10. In particular, the remote instruction source 12A of Figure 2 is provided with features which enable the remote instruction source 12A to be able to provide the PIPS 10 with an instruction notification such that a pre-allocation of an expected instruction can be performed prior to the instruction being sent, and also with features which enable the processed instruction (and/or its processed results) to be received by the remote instruction source 12A. The remote instruction source 12A of Figure 2 is also provided with features which enable further information relating to an instruction notification to be sent to the PIPS 10 in order to enable a more efficient pre-allocation of an instruction to be performed.

The remote instruction source 12A first comprises an instruction notification generator 30 which generates an instruction notification relating to an expected instruction and then transmits this notification to the PIPS 10 via the external communications network 14. The instruction notification generator 30 typically creates an instruction notification record which contains various information parameters relating to the expected future instruction. These parameters may include the source of the instruction notification, the type of task to be instructed by the expected instruction, an expected amount of data to be processed within the instruction, an estimate of when the related instruction is expected to be transmitted and any historic data related to previous instructions from the same source. The transmitted instruction notification will then be used by the PIPS 10 to perform a pre-allocation of the expected instruction to an appropriate and available processing system 16A, 16B, 16C.

The remote instruction source 12A also comprises a supplementary information generator 32 which is configured to transmission further information to the PIPS 10 regarding an instruction notification which has previously been sent. This transmission is expected to occur via the external communications network 14. The supplementary information generator 32 may provide the PIPS 10 with any information regarding an instruction notification which was not available upon initial transmission of the instruction notification, as well as updating information which may have been amended since the initial transmission. This may be the case where the expected amount of data to be processed was not initially known, or has been changed. Similarly, this may be the case where an initial estimate of the expected time of delivery of an instruction is unknown or has been otherwise changed. This updated information may be used by the PIPS 10 to update the calculation in respect of the pre-allocation of the expected instruction and, where necessary, to re-allocate the expected instruction accordingly.

The remote instruction source 12A is also provided with an instruction generator 34 which is configured to provide the PIPS 10 with an instruction to enact a particular task. In the present embodiment, this is envisaged as occurring subsequently to an instruction notification being generated by the instruction notification generator 30 and any necessary updates being provided by the supplementary information generator 32. This transmission is expected to occur via the external communications network 14. Upon transmission of the instruction to the PIPS 10, the instruction will be allocated to an appropriate processing system 16A, 16B, 16C in accordance with the pre-allocation which has previously been performed by the PIPS 10. In other embodiments, the instruction generator 34 provides an instruction to the PIPS 10 without previously providing an instruction notification. In these scenarios, when the instruction is transmitted to the PIPS 10, the PIPS 10 will simply perform an allocation of the instruction without reference to a pre-allocation calculation that has previously been performed. In either case, the instructions typically comprise one or more tasks to be completed by a processor in connection with an associated memory. The instructions typically contain sufficient information for the processor to complete the task based on the information. The tasks will also typically be finite in nature rather than comprising a persistent process which is performed indefinitely. In embodiments in which an instruction notification has not been provided prior to transmission of the instruction, the instruction itself may also comprise additional information which is sufficient to enable the instruction to be allocated to a suitable processing system 16A, 16B, 16C.

Further, the remote instruction source 12A of Figure 2 is also provided with an instruction modification generator 36 which can transmit further information to the PIPS 10 subsequent to the instruction being transmitted which modifies the instruction. The transmission of further information occurs via the external communications network 14. This modification is typically made after the instruction has been transmitted but prior to the initialisation of the processing of the instruction. Additionally or alternatively, the modification may also occur subsequent to the initialisation of the processing of the instruction. This modification may include amending the amount of data which is to be processed as part of the instruction or even requesting that the instruction which is undergoing processing terminate immediately. The modification of the instruction may be used by the PIPS 10 to re-allocate the instruction in question if required, as well as re-allocating any other instructions or expected instructions in the PIPS 10 where the PIPS determines that such re-allocation is desirable in order to more efficiently process each instruction or expected instruction.

The example remote instruction source 12A may also include a processed instruction receipt processor 38 which is configured to receive the results of a processed instruction from the PIPS 10 subsequent to the instruction being processed by a processing system 16A, 16B, 16C. The transmission of the results may occur through the external communications network 14. Upon transmission of the results, the PIPS 10 may be configured to remove the now completed instruction from any allocation calculations which are subsequently performed. The PIPS 10 may also store relevant information relating to the processed instruction for use in future allocation or pre-allocation calculations, such as the length of time taken to process the instruction and any modifications made to the initial instruction notification and the actual instruction.

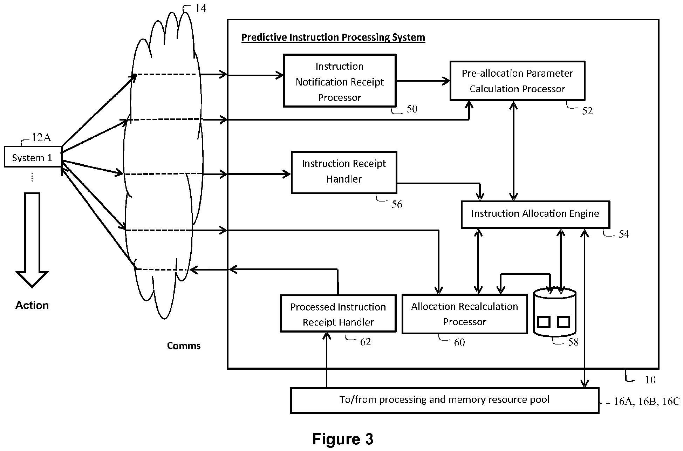

Turning to Figure 3, there is shown in greater detail a PIPS 10 in accordance with a first embodiment of the present invention. The PIPS 10 receives and transmits data transmissions from the remote instruction sources 12A, 12B, 12C in relation to instructions to be processed in accordance with the embodiment of the remote instruction source 12A described in Figure 2. This includes the receipt of instruction notifications, supplementary information relating to existing instruction notifications, instructions to be processed and modifications to the instructions to be processed. Upon receipt of an instruction notification, the PIPS 10 processes the information provided in the instruction notification and provides a pre-allocation of the instruction to which the notification relates to an associated processing system 16A, 16B, 16C. This pre-allocation involves assigning the expected instruction to a particular processing system 16A, 16B, 16C in accordance with present and historic information in addition to other instructions and instruction notifications which have already been allocated or pre-allocated. Upon receipt of supplementary information relating to an existing instruction notification, the PIPS 10 performs a recalculation of the allocation of the related instruction notification and where necessary re-allocates one or more of the instructions and instruction notifications presently being handled by the PIPS 10. Upon receipt of an instruction, the PIPS 10 as shown in Figure 3 allocates the instruction in accordance with the pre-allocation of the instruction previously calculated on the basis of the instruction notification. In other embodiments, the PIPS 10 may additionally or alternatively be configured to receive instructions without a previous instruction notification being sent. In such an embodiment, the allocation of the instruction occurs upon receipt of the instruction. Upon receipt of modification to the instructions to be processed, the PIPS 10 processes the received information and determines whether it is desirable to re-allocate one or more of the instructions and instruction notifications presently being handled by the PIPS 10.

Once the processing of an instruction has been completed, the PIPS 10 transmits results of the processed instructions to the remote instruction sources 12A, 12B, 12C. Please note that in Figure 3, for the purposes of clarity, there is only one remote instruction source 12A shown, however it is to be understood that multiple remote instruction sources 12A, 12B, 12C may transmit instructions and instruction notifications to the PIPS 10 and these instructions and instruction notifications may be handled by the PIPS 10 simultaneously in parallel according to an embodiment of the present invention.

The PIPS 10 comprises an instruction notification receipt processor 50 which receives instructions from the remote instruction source 12A via the external communications network 14. The instruction notification receipt processor 50 is configured to receive and process the instruction notifications such that they are in a suitable format to be further processed by the PIPS 10 such that the instruction to which the notification relates may be pre-allocated. The instruction notification processing may comprise identifying the remote information source 12A that the instruction has originated from (if the information has not been provided in the instruction notification) and determining whether the remote information source 12A has permission to send instruction notifications to be processed by the PIPS 10 and the processing systems 16A, 16B, 16C in the associated processing and memory resource pool. The instruction processing may further comprise whether the provided instruction notification contain sufficient information to allow the instruction notification to be pre-allocated.

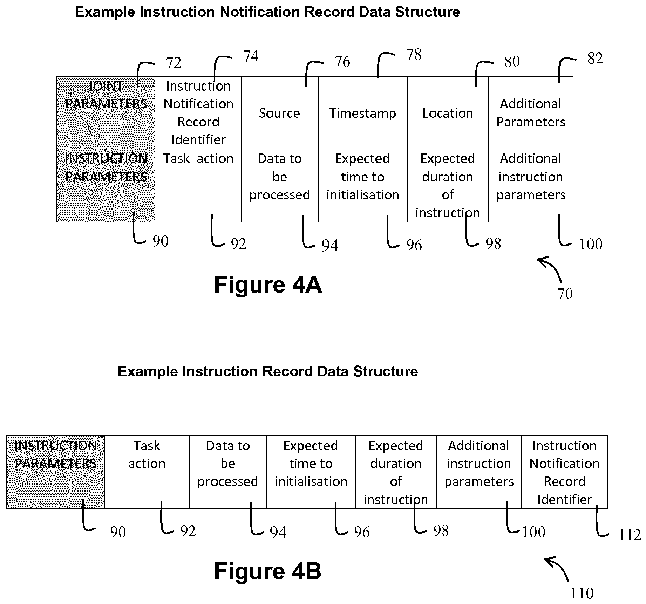

The instruction notifications typically comprise information which enables the PIPS 10 to perform a pre-allocation of the instruction to which the instruction notification relates. In particular, as mentioned previously, an instruction notification may comprise the source of the instruction notification, the type of task that the instruction will comprise, the expected time of provision of the full instruction as well as additional parameters which enable the PIPS 10 to make a pre-allocation of the expected instruction. These additional parameters may comprise any further information which aids in the calculation of the pre-allocation of an instruction. A non-exhaustive list of such parameters includes the amount of data to be processed within the task, whether the processing of the task is suitable to be split across multiple processing systems 16A, 16B, 16C and whether further information is expected to be provided before the instruction itself is provided. An example data structure for the instruction notifications is provided below, with reference to Figures 4A and 4B.

As the instruction notifications are received via the external communications network 14, it is conceivable that the instruction notifications may undergo some form of data corruption as they are being transmitted, or that the remote instruction source 12A did not provide all of the information necessary to allocate the related instruction notification. In some embodiments of the present invention, the instruction notification receipt processor 50 is additionally configured to verify the veracity and integrity of the instruction notifications and only process the instruction notifications if the data is complete and uncorrupted. Where the veracity and integrity of the instruction notifications is not sufficient to allow the instruction to which the notification relates to be allocated, the instruction notification receipt processor 50 is configured to notify the remote instruction source 12A, which supplied the initial instruction notification, that the instruction notification is unable to be processed

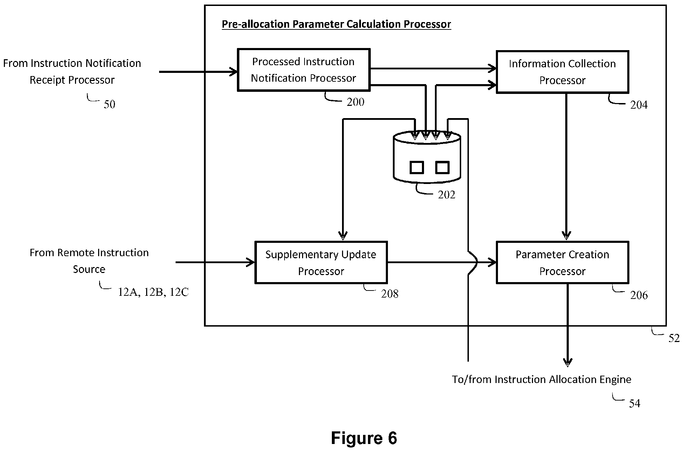

Once an instruction notification has been processed by the instruction notification receipt processor 50, the instruction notification system is passed to a pre-allocation parameter calculation processor 52 which is coupled to the instruction notification receipt processor 50. The pre-allocation parameter calculation processor 52 is configured to further process the instruction notification in order to calculate parameters which may be used other features in the PIPS 10 in order to calculate to which processing system 16A, 16B, 16C the instruction to which the instruction notification should be pre-allocated to. This may be achieved by analysis of the information provided in the instruction notification in conjunction with historical information to determine an estimate of when the instruction is likely to be received, how much processing and memory resource it will require to be processed and whether there are any limitations regarding the configuration of processing systems 16A, 16B, 16C which can process the instruction. How this analysis is achieved is discussed further below with reference to Figure 6.

The pre-allocation parameter calculation processor 52 is additionally configured to receive transmissions directly from the remote instruction source 12A relating to the provision of supplementary information in respect of a previously provided instruction notification in accordance with embodiments described above. The provided information from the remote instruction source 12A may supply the pre-allocation parameter calculation processor 52 with additional information which will alter the calculation of parameters used to calculate which processing system 16A, 16B, 16C the instruction to which the instruction notification should be pre-allocated to. This additional information may be entirely new, or may also be a revision of previously provided information. The alteration of the calculation is discussed in more detail with reference to Figure 6.

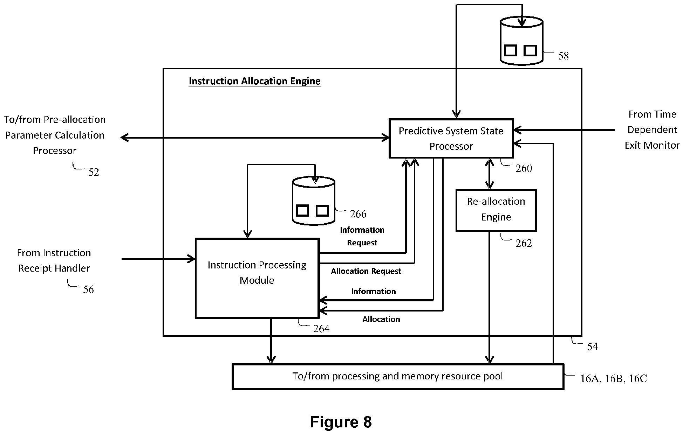

The pre-allocation parameter calculation processor 52 is additionally coupled to an instruction allocation engine 54 which, upon calculation of relevant parameters by the pre-allocation parameter calculation processor 52, performs a pre-allocation of the instruction, to which the instruction notification relates, to one or more processing systems 16A, 16B, 16C. This pre-allocation "reserves" processing resource at a particular time at which the instruction is expected to be received, namely schedules expected use of the processing resource. The instruction allocation engine 54 additionally monitors the allocation and pre-allocation of all instructions and expected instructions in order to allocate all instructions and expected instructions to maximise the efficiency of the processing of all instructions. The instruction allocation engine 54 achieves this by consideration of the various information parameters calculated by the pre-allocation parameter calculation processor 52 and any information provided subsequent to the start of processing of instructions to determine an overall allocation of instructions at a point in time which minimises the time that an instructed task waits before beginning processing. The instruction allocation engine 54 further achieves this by allocating instructions to, where possible, minimise the use of processing resource needed to process all of the instructions. For example, where it is possible to process two instructions using either one or two processing systems 16A, 16B, 16C, the instruction allocation engine 54 will choose the arrangement which minimises the processing resource needed, which may comprise sending both instructions to a single processing system 16A, 16B, 16C. In embodiments where it is more procedurally efficient to use two processing systems 16A, 16B, 16C however, the instruction allocation engine 54 will choose to use two processing systems 16A, 16B, 16C. How this is to be achieved is discussed in more detail with reference to Figure 8.

The information used to perform the allocation of the instructions may also include information regarding the status of processed instructions received from the processing systems 16A, 16B, 16C. This may include informing the instruction allocation engine 54 when an instruction has been fully processed, or if it has encountered an error. This information may be used to remove the relevant instruction from any future allocation calculations.

Where it is determined by the instruction allocation engine 54 that a re-allocation of instructions already being processed is required, the instruction allocation engine 54 is configured to transmit this re-allocation to the processing and memory resource pool 16A, 16B, 16C to which it is communicably coupled. This transmission is configured to indicate which instructions presently being processed need to be re-arranged in accordance with the determined maximally efficient allocation and to command the instructions being processed to move an instruction from one processing system 16A, 16B, 16C to another where necessary. In some embodiments, this re-allocation may occur instantaneously. In other embodiments, it may first be necessary for the processing of an instruction to reach a suitable point at which the instruction is able to be transferred without loss of information. In this embodiment, the re-allocation occurs at a time which prevents such a loss of information.

The instruction allocation engine 54 is additionally coupled to an instruction receipt handler 56 and is configured to receive processed instructions from the instruction receipt handler 56. The processed instructions may be in any suitable format which may be interpreted by the instruction allocation engine 54 and/or the processing systems 16A, 16B, 16C to allow one or more tasks comprised within the instruction to be completed by a processor in connection with an associated memory. The instructions typically contain sufficient information for the processing system 16A, 16B, 16C to complete the task based on the information. The tasks are also typically finite in nature rather than comprising a persistent process which is performed indefinitely. The instruction receipt handler 56, upon receipt of an instruction, performs any processing needed to bring the instruction into a suitable format to be interpreted by the instruction allocation engine 54.This may comprise verifying the veracity and integrity of the instruction and the instruction receipt handler may only transmit the instruction to the instruction allocation engine 54 if the data is complete and uncorrupted. Where the veracity and integrity of the instruction is not sufficient to allow the instruction to which the notification relates to be allocated, the instruction receipt handler 56 is configured to notify the remote instruction source 12A, which supplied the initial instruction notification, that the instruction notification is unable to be processed.

Upon the receipt of an instruction from the instruction receipt handler 56, the instruction allocation engine 54 allocates this received instruction to a processing system 16A, 16B, 16C to which the instruction allocation engine 54 is coupled, in accordance with any pre-allocation of the instruction which has already been performed. Where it is determined that the received instruction has not been pre-allocated, the instruction allocation engine 54 is configured to determine upon receipt of the instruction to which processing system 16A, 16B, 16C the instruction should be allocated and the instruction is then transmitted to the relevant processing system 16A, 16B, 16C. In addition, the instruction allocation engine 54 may also be configured to determine when the received instruction is to be processed, that is to say whether the instruction can be processed immediately or whether it should be held in a queue for a period of time before being processed. The way this is achieved is detailed further below, with reference to Figure 8.

The instruction allocation engine 54 is also coupled to a database 58 which stores information records relating to the allocation status of received instructions and instruction notifications. Upon a particular instruction or instruction record being allocated or pre-allocated, the instruction allocation engine 54 stores a record of where the instruction or instruction record is allocated or pre-allocated in this database 58. When further allocation or pre-allocation of an instruction is subsequently performed, this database is accessed in order to determine the allocation status of all instruction and instruction notification records presently being managed by the PIPS 10. The retrieved information is then used in the calculation of this new allocation. The way this is achieved is detailed further below, with reference to Figure 8.

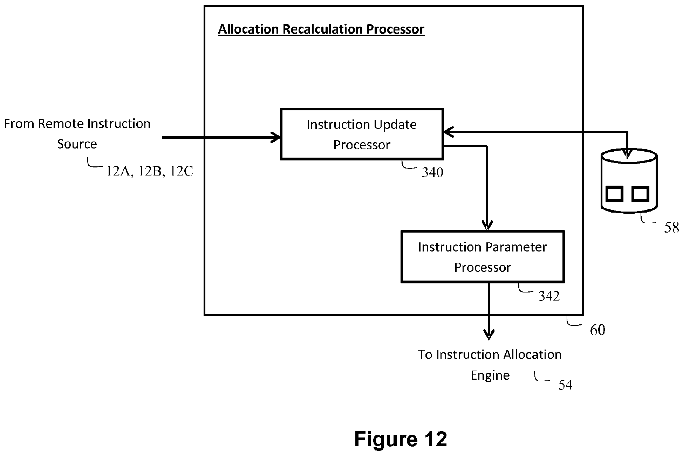

The instruction allocation engine 54 is also configured to be coupled to an allocation recalculation processor 60 which provides the instruction allocation engine 54 with further information regarding instructions which have already been supplied to the instruction allocation engine 54. The allocation recalculation processor 60 is configured to receive information relating to an instruction which has previously been transmitted from a remote instruction source 12A and to calculate additional parameters which enable the instruction allocation engine 54 to determine whether a re-allocation of the instruction is required. The allocation recalculation processor 60 may also be configured to transmit any modifications to a task in a previously received instruction to the instruction allocation engine 54 so that any modifications to the task may be provided to the relevant processing system 16A, 16B, 16C. Such modifications may comprise an amended amount of data to be processed or an instruction status change such as an indication that the instruction should be cancelled. The allocation recalculation processor 60 is also configured to be communicably coupled to the database 58 containing records regarding the allocation status of the instructions and instruction records. This is provided so that the information contained in the database 58 can be used to aid in the calculation of the additional parameters to be transmitted to the instruction allocation engine 54. The way in which this is achieved is described in greater detail below with reference to Figure 12.

The PIPS 10 of Figure 2 is also provided with a processed instruction receipt handler 62 which is configured to receive the results from a completed instruction from the processing system 16A, 16B, 16C and then return the results to the remote instruction source 12A that the completed instruct originated from. This is achieved by determining the source of the completed instruction from the instruction record and providing the completed instruction to the identified source. In such an embodiment, this will be provided in a push notification i.e. the remote instruction source 12A will not need to request the results of the completed instruction in order for it to be sent. In alternate embodiments, the processed instruction receipt handler 62 is configured such that the results of a processed instruction are stored in the processed instruction receipt handler 62 until a pull request for the processed instruction is received from the remote instruction source 12A. In such embodiments, the processed instruction receipt handler 62 is configured to issue a notification to the remote instruction source 12A informing the remote instruction source 12A that the instruction has now been processed and the results are available.

In additional embodiments, it is possible that a remote instruction source 12A, 12B, 12C is provided with the results for instructions which it did not request the processing of. In such embodiments, the processed instruction receipt handler 62 is configured to allow the results of a processed instruction to be retrieved by (or otherwise delivered to) any remote instruction source 12A, 12B, 12C which the processed instruction record has identified as having permission to do so. This permission may be detailed in one of the parameters which form part of the instruction record.

Turning to Figure 4A, there is shown an example data structure 70 of an instruction notification which can be sent by the remote instruction source 12A to be received by the instruction notification receipt processor 50. In this embodiment this data structure 70 may be considered to be the instruction notification itself. In the embodiment of the PIPS 10 as shown in Figure 3, this data structure is provided in advance of an instruction being sent to the PIPS 10.

The data structure 70 comprises a plurality of information parameters, which are used both to uniquely identify the instruction notification, as well as providing the PIPS 10 with sufficient information parameters to be able to perform a pre-allocation of the instruction to which the notification relates. These information parameters are all configured such that the information parameters may be varied upon further information being received from the remote instruction source 12A. This allows the possibility of a remote instruction source 12A to alter an instruction notification which has previously been sent. This may be in the form of a shorter update instruction notification. The provision of information parameters configured in this manner allows the information parameter to be altered without requiring that an entirely new instruction notification be sent.

The information parameters in the instruction notification 70 are, in an embodiment of the present invention, comprised of joint parameters 52 and instruction parameters 90. Joint parameters 72 are parameters which may apply to both the instruction notification record 70 and the subsequent instruction it relates to. Instruction parameters 90 are information parameters which specifically apply to the instruction that the instruction notification 70 relates to. The instruction parameters 90 are typically used by the PIPS 10 in order to determine a pre-allocation of the expected instruction to which the instruction notification 78 relates.

The joint parameters 72 of this embodiment comprise a unique instruction notification record identifier 74, which may be assigned to the request on receipt by the instruction notification receipt processor 50, or may be assigned when the remote instruction source 12A initiates the instruction notification. The joint parameters 72 further comprise the source 76 of the information notification identifying the remote instruction source 12A which the instruction notification originated from. The joint parameters 72 further comprise a timestamp 78 indicating when the instruction notification was initiated by the remote instruction source 12A. Again, this is assigned to the request on receipt by the instruction notification receipt processor 50, or is assigned when the remote instruction source 12A initiates the instruction notification. The joint parameters 72 yet further comprise the location 80 that the instruction notification was sent from. This may be useful in determining where a plurality of instructions is being received from similar locations in order to aid in the pre-allocation of the instruction the instruction notification relates to. The joint parameters 72 also additionally comprise any relevant additional parameters 82 that relate to the instruction notification and the instruction it relates to such as any historical data relating to previous instruction notifications transmitted by the remote instruction source 12A.

The instruction parameters 90 of this embodiment comprise a task action 92 which indicate which actions are expected to be needed to be completed by a processing system 16A, 16B, 16C. This information is typically used in determining which processing systems are configured to be able to process the instruction and may also be used to estimate the amount of processing resource required to process the instruction. The instruction parameters 90 further comprise an expected amount of data which needs to be processed 94. This is typically used to estimate the amount of processing resource required to process the instruction. The instruction parameters 90 yet further comprise an expected time to initialisation of the instruction 96 which indicates when the instruction to which the instruction notification relates is expected to be transmitted. This information is typically used to determine when the instruction will need to be allocated to a processing system 16A, 16B, 16C. The instruction parameters 90 also further comprise an expected duration of the instruction 98 which indicates the length of time that it is expected the instruction will require to complete. This is typically used to determine the amount of time an allocated processing system 16A, 16B, 16C will be utilised by the processing of a particular instruction. Finally, the instruction parameters 90 may also comprise any additional instruction parameters 100 in respect of the instruction to which the instruction notification relates. This may include any historical data relating to previous instructions transmitted by the remote instruction source 12A.

It is to be appreciated that the instruction notification record 70 of Figure 4A is an example only and may be altered in any manner such that the functionality of the PIPS 10 of Figure 3 may be achieved. In particular, it is noted that a pre-allocation of an instruction may be enabled so long as only one instruction parameter 90 is provided. The provision of greater or fewer instruction parameters 90 may simply affect the calculated pre-allocation which is generated by the PIPS 10. It is to be further appreciated that additional instruction notifications 70 may be transmitted to the PIPS 10 relating to the same instruction, which amend the information provided in the information parameters of the initial notification. These additional instruction notifications comprise sufficient information parameters to identify the instruction notification to which it relates and to update or amend the initial instruction notification as required. For example, the additional instruction notification may comprise the instruction notification record identifier 74 and a subset of instruction parameters 90 which are intended to either be appended to the initial instruction notification or to replace information contained within it.

Figure 4B shows an example data structure 110 of an instruction which can be sent by the remote instruction source 12A to be received by the instruction notification receipt processor 50. In this embodiment this data structure 110 may be considered to be the instruction itself. In the embodiment of the PIPS 10 as shown in Figure 3, this data structure is provided subsequent to an instruction notification 70 being sent to the PIPS 10.

The instruction data structure 110 is similar to that of the data structure of the instruction notification 70. However, the instruction data structure does not comprise any joint parameters 72 and instead only comprises instruction parameters 90 relating to the instruction. In particular, the task action 92, data to be processed 94, expected time to initialisation 96, expected duration of instruction 98 and additional instruction parameters 100 are all included in the instruction data record 110. The main difference between these parameters in the instruction data record 110 and the instruction notification data record 70 are that in the instruction data record 110, these values would typically be expected to no longer be estimations and are instead confirmations of these values. For example, the expected time to initialisation 96 is now a confirmed timestamp, since the instruction has been delivered. However, it some embodiments it is envisaged that these parameters may still not be definitively known, and therefore these parameters may still be estimates.

The main difference between the instruction data record 110 and the instruction notification data record 70 is that the instruction data record 110 includes an instruction notification record identifier parameter 112. This is typically used to inform the PIPS 10 of the instruction notification to which this particular instruction relates. This is used by the PIPS 10 to retrieve relevant information in respect of the present instruction, and in particular, the pre-allocation that the instruction has been assigned.

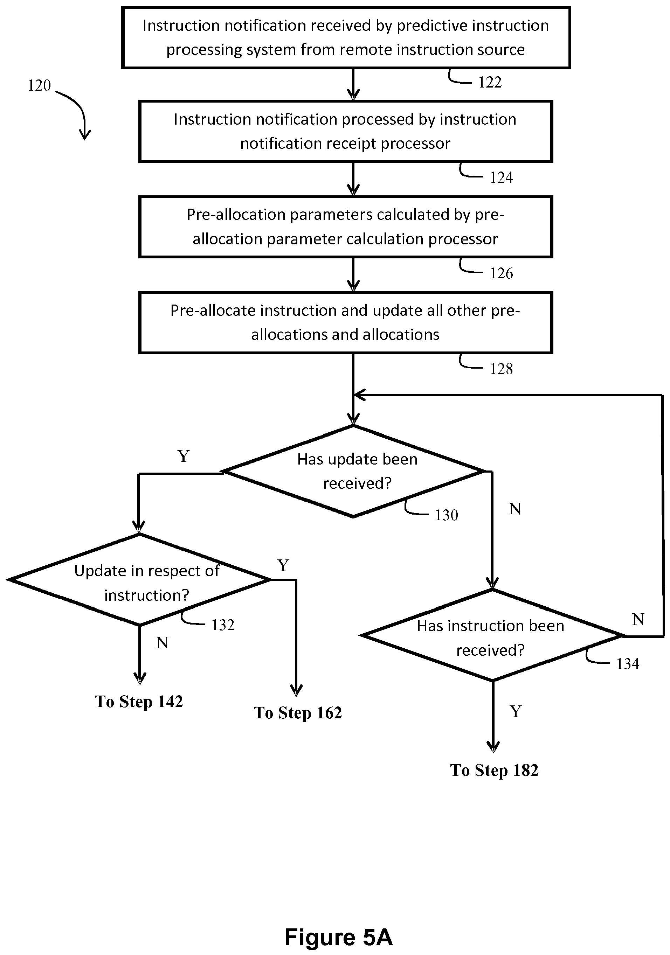

Figure 5A shows in detail a method of operation 120 of an embodiment of the PIPS 10. In particular, there is described a method of operation detailing how an instruction notification is received by the PIPS 10 and is then subsequently pre-allocated for processing by a processing system 16A, 16B, 16C. The method of operation 120 begins by receiving, at Step 122, an instruction notification from a remote instruction source 12A, 12B, 12C. The instruction notification is received by the instruction notification receipt processor 50. Following the receipt of the instruction notification, the instruction notification is subsequently processed, at Step 124, by the instruction notification receipt processor 50. This processing may comprise any one or more of ensuring that the instruction notification is in a suitable format for further processing by the PIPS 10 and/or the processing systems 16A, 16B, 16C, assigning a unique identifier to the instruction notification, assigning a timestamp to the instruction notification and verifying the veracity and integrity of the instruction to ensure that the instruction notification can be processed by the PIPS 10 and/or the processing systems 16A, 16B, 16C.

After the instruction notification is processed, it is then passed to the pre-allocation parameter calculation processor 52 where pre-allocation parameters are calculated, at Step 126, from the information provided in the instruction notification. These parameters may comprise any parameters that may be used in a calculation to perform a pre-allocation of the instruction to which the instruction notification relates. These parameters may comprise calculating an approximate time of entry of the instruction, an estimated amount of data to be processed in the instruction, determining whether the instruction requires a processor configured in a particular manner, the expected processing duration of the instruction and any further information in respect of historical data in relation to the present instruction notification. The way that this is achieved is discussed in greater detail with reference to Figure 6. These parameters may be appended to the instruction notification data record 70 or otherwise transmitted with the instruction notification data record 70.

Following this, the instruction notification is passed to the instruction allocation engine 54 where the instruction to which the instruction notification is related is pre-allocated, at Step 128, to be processed by a processing system 16A, 16B, 16C at a particular time. This pre-allocation concurrently determines whether any existing instructions which have been allocated or pre-allocated need to be re-allocated as part of the pre-allocation of the present instruction.

Pre-allocation comprises reserving processing resource at a particular point in the future (in time) specifically for the processing of the pre-allocated instruction. At the point of pre-allocation, the processing resource does not perform any processing of the pre-allocated instruction and in some embodiments, the pre-allocation process does not interact with the processing systems 16A, 16B, 16C at all. Instead, the allocation and pre-allocation state of each processing system 16A, 16B, 16C may be held in a database and upon determination of a pre-allocation, the database is updated to reflect the new information. The way in which this is achieved is discussed further with reference to Figure 8.

Following the pre-allocation of the instruction, the method then proceeds to determine, at Step 130, whether there has been an update provided in relation to an existing instruction notification or instruction being managed by the PIPS 10. This instruction notification is provided by a remote instruction source 12A, 12B, 12C typically in respect of an instruction notification or instruction which has previously been provided by that remote instruction source 12A, 12B, 12C. Whilst the present method 120 is discussed in the context of one particular instruction notification, it is to be understood that the update of any instruction notification or instruction may affect the pre-allocation of the present instruction notification. Therefore, in the context of the present method, if it is determined that there has been an update to any instruction notification or instruction being managed by the PIPS 10, it is determined that an update has been received.

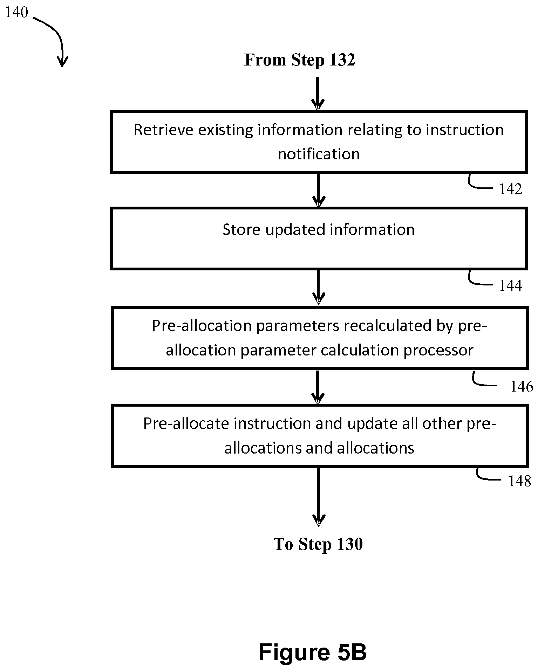

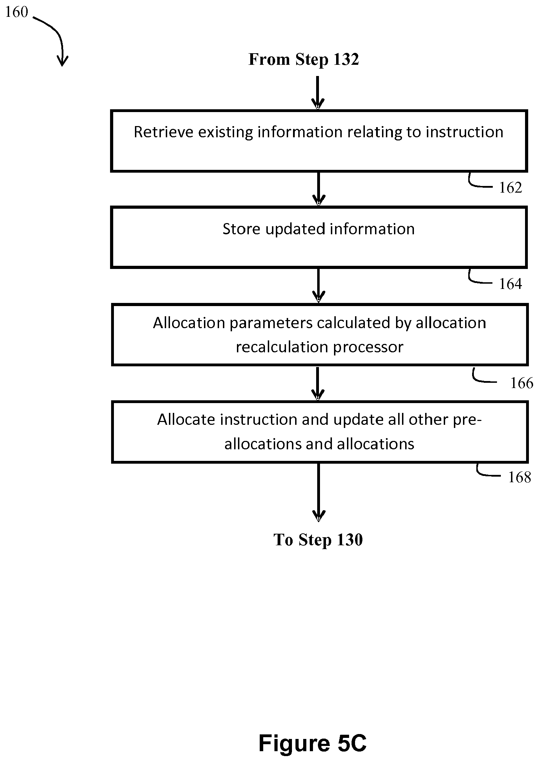

If it is determined, at Step 130, that an update has been received, then the method then proceeds to determine, at Step 132, whether the update relates to an existing instruction. The update can relate to either an existing instruction which has been received, or an instruction notification in respect of an expected instruction which is to be delivered at a later time. Depending on which of these possibilities the update is related to, the method proceeds in a different manner. If it is determined that the update relates to an instruction, then the method 120 proceeds to Step 162 of Figure 5C. If however it is determined that the update relates to an instruction notification, then the method 120 proceeds to Step 142 of Figure 5B. Both of these are discussed in further detail below with reference to these figures.

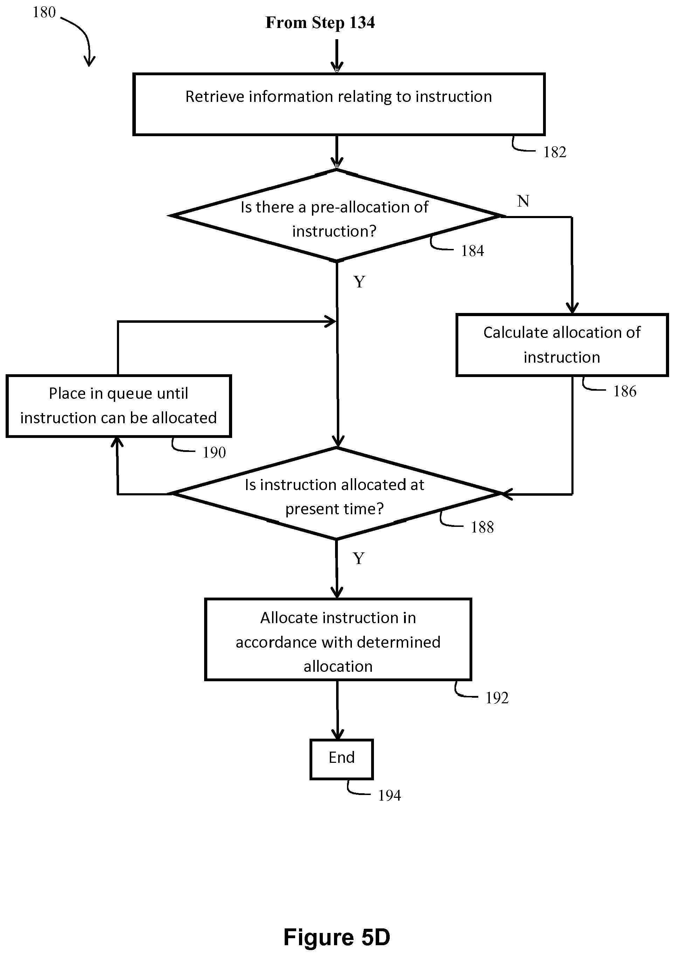

Returning to Step 130, if it is determined that no update has been received, then the method 120 proceeds to determine, at Step 134, whether an instruction has been received by the PIPS 10 in respect of the instruction notification which has previously been provided by the remote instruction source 16A, 16B, 16C. If it is determined that no instruction notification has been received then the method 120 then proceeds to return to Step 130, where it is determined whether an update has been received. If instead it is determined that an instruction has been received, then the method 120 then proceeds to Step 180 of Figure 5D. This discussed in further detail below with reference to Figure 5D.

Turning now to Figure 5B, there is shown in greater detail a method 140 for responding to an update to an existing instruction notification relating to an expected future instruction. The method begins when it is determined, at Step 130 of Figure 5A, that an update to an instruction notification has been received. This is typically received by the pre-allocation parameter calculation processor 54. Following the receipt of the update, the method 140 then proceeds to retrieve, at Step 142, existing information relating to the instruction notification that the update relates to. This is typically achieved by retrieving information from a database comprised in the pre-allocation parameter calculation processor 54 in which existing information relating to this instruction notification is stored. Following the retrieval of this information, the method 140 then stores, at Step 144, the updated information in the database.

After the information has been stored, the pre-allocation parameter calculation processor 54 then recalculates, at Step 146, the pre-allocation parameters associated with this instruction notification. This recalculation is performed in the same way as discussed in Step 126 of Figure 5A and is discussed in greater detail with reference to Figure 6. Once the pre-allocation parameters have been calculated, the instruction notification is then pre-allocated, at Step 148, and all other pre-allocations and allocations are updated accordingly. This is achieved in the same way as discussed in Step 128 of Figure 5A and is discussed further with reference to Figure 8. Following this, the method then proceeds to Step 130 of Figure 5A, where it is determined whether a further update has been provided to the PIPS 10.

Turning to Figure 5C, there is shown in greater detail a method 160 for responding to an update to an existing instruction which has been previously provided. Such an instruction may comprise an instruction which is currently being processed by a processing system 16A, 16B, 16C. Additionally or alternatively, the instruction may comprise an instruction being held in a queue which is provided in the PIPS 10. This update is typically received by the allocation recalculation processor 60. The updated information may comprise amendments to any information presently associated by the instruction, such as an amendment to the amount of data to be processed (in the event that more or less data is to be processed) or to cancel the instruction entirely.

Once the update has been received, the method 160 then proceeds to retrieve, at Step 162, existing information relating to the updated instruction. This is typically achieved by accessing information in the database 58 of the PIPS 10 which is coupled to the instruction allocation engine 58. Following the retrieval of this information, the method 160 then stores, at Step 164, the updated information in the database 58.

After the information has been stored, the allocation recalculation processor 60 then calculates, at Step 166, the allocation parameters associated with this updated instruction. This calculation may comprise the calculation of any parameters that may be used in a calculation to perform a new allocation of the instruction. These parameters may comprise calculating a new amount of data to be processed, the amount of data which has already been processed, the expected time to completion of the updated instruction and any further information in respect of historical data in relation to the present instruction notification. The way that this is achieved is discussed in greater detail with reference to Figure 12.

Once the allocation parameters have been calculated, the method then proceeds to allocate, at Step 168, the instruction in accordance with the updated information and additionally update all other pre-allocations and allocations being managed by the PIPS 10. This is achieved in the same way as discussed in Step 128 of Figure 5A and is discussed further with reference to Figure 8. Following this, the method then proceeds to Step 130 of Figure 5A, where it is determined whether a further update has been provided to the PIPS 10.

Referring now to Figure 5D, there is shown a method of operation 180 for responding to an instruction being provided to the PIPS 10 by the remote instruction source 12A, 12B, 12C. This instruction is typically received by the instruction receipt handler 56 before being passed to the instruction allocation engine 54.

The method 180 begins when it is determined, at Step 132 of Figure 5A that an instruction has been received. Once this has been determined, the method 180 proceeds to retrieve, at Step 182, information relating to the instruction. This information typically comprises an indication of whether the instruction has been pre-allocated in accordance with embodiments as described above and if so, the details of the pre-allocation. Once the information has been retrieved, the method proceeds to determine, at Step 184, whether the instruction has been pre-allocated in accordance with the retrieved information. If it has not, the method then proceeds to perform, at Step 186, an allocation of the instruction. The way in which this may be achieved is described in more detail with reference to Figure 8.

If it is determined at Step 184 that the received instruction has been pre-allocated, then the method then determines, at Step 188, whether the instruction can be allocated at the present time. This determination will be made in accordance with the retrieved information regarding the pre-allocation. In some circumstances, the instruction may have been received earlier than expected and as such, there will not be sufficient processing resource for the instruction to be allocated upon receipt. In other scenarios, it may have been determined that the optimal allocation state for all instructions and expected instructions managed by the PIPS 10 results in the allocation of the present instruction at a time later than the delivery date. In such scenarios, the instruction is not be able to be allocated. If it is determined that this is the case, then the method 180 proceeds to place, at Step 190, the received instruction in a queue until such a time as the instruction can be allocated. Once this time is reached, the method 180 proceeds back to Step 188 where it is determined whether the instruction can be allocated. It is possible that in the intervening time, the allocation time of the instruction will have changed and it may be necessary for the instruction to be placed back in the queue.

If it is determined, at Step 188, that the instruction can be allocated, then the method proceeds to allocate, at Step 192, the instruction to a processing system 16A, 16B, 16C in accordance with the determined allocation. The instruction is then processed in order to accomplish the task requested by the instruction. The method 180 then proceeds to terminate at Step 194. The instruction may be subject to being moved to another processing system 16A, 16B, 16C as a result of updates to instructions and instruction notifications managed by the PIPS 10.

Returning to the elements of an embodiment of the PIPS 10 of Figures 1 and 3, Figure 6 illustrates the pre-allocation parameter calculation processor 52 in more detail. The pre-allocation parameter calculation processor 52 comprises a processed instruction notification processor 200, which is configured to receive a processed instruction notification from the instruction notification receipt processor 50. The processed instruction notification processor 200 is additionally configured to place a copy of the record of the received instruction notification into a database 202 to which the processed instruction notification processor 200 is coupled. This record typically comprises all of the information parameters present in the provided instruction notification 70. The database typically comprises records for all instructions that have been managed by the PIPS 10. These records contain information initially provided by the remote instruction source 12A, 12B, 12C, as well as information related to how long a particular instruction took to process. This information may be provided by the instruction allocation engine 54 to which the database 202 is coupled.

The pre-allocation parameter calculation processor 52 further comprises an information collection processor 204 which is coupled to the processed instruction notification processor 200. The information collection processor 204 is configured to receive the instruction notification data record 70 from the processed instruction notification processor 200. The information collection processor 204 is further configured to retrieve additional information relevant to the allocation of the present instruction notification. The relevant information may be determined upon consideration of the information parameters provided in the present instruction notification data record 70. For example, the information collection processor 204 may determine the task type of the present instruction notification and retrieves any information related to previous allocations of the same or similar task types. Additionally or alternatively, the information collection processor 204 may determine the source of the present instruction notification and retrieves any information related to previous allocations of instruction notifications originating from the same source. The additionally retrieved information may be appended to the instruction notification data record and then subsequently stored.

The information collection processor 204 is additionally coupled to a parameter creation processor 206. The parameter creation processor 206 is configured to receive information relating to the instruction notification and to use this information to generate parameters that can be used to assign a pre-allocation to the instruction notification. This information may be received from the information collection processor 204. The information which is received is analysed and is used in calculations to create these parameters. Alternatively, the provided information may be determined as being a parameter suitable to aid in assigning a pre-allocation without any further calculation.

For example, information regarding the amount of data to be processed may be provided to the parameter creation processor 206. This may be then used in combination with known information regarding the capabilities of a processor in order to determine the expected duration of the instruction. Alternatively, the expected duration may already be provided as part of the information which is transmitted to the parameter creation processor 206. In this instance, no further calculation will be required. Similarly, information may be provided regarding the source of the instruction notification and the expected delivery time of other instructions from this source. The parameter creation processor 206 may then use this information to calculate an expected time of delivery of the instruction. Alternatively, the expected delivery time may already be provided as part of the information which is transmitted to the parameter creation processor 206. In this instance, no further calculation will be required. The above examples are provided by way of illustration and is not an exhaustive list of the calculations that may be performed by the parameter creation processor 206.

The pre-allocation calculation processor 52 also comprises a supplementary update processor 208 which is configured to receive updated information in respect of previously transmitted instruction notifications from the remote information source 12A, 12B, 12C. The supplementary update processor 208 is coupled to the database 202 and is configured to retrieve information relating to the updated instruction notification from the database 202. The information which is retrieved may comprise any information which is relevant to the updated instruction notification and aids in the calculation of parameters which may be used to aid in the assignment of the instruction notification. The relevant information is in accordance with the description given above when referring to the information collection processor 204.

The supplementary update processor 208 is additionally coupled to the parameter creation processor 206 and is configured to provide the retrieved relevant information regarding the instruction notification to the parameter creation processor 206. The parameter creation processor 206 then uses this information to generate parameters that can be used to assign a pre-allocation to the instruction notification. This is performed in accordance with the embodiment described above. The parameters which are created as a result of the updated instruction notification supersede those generated as a result of the provision of the initial instruction notification, and any previous updates which have been provided to the PIPS 10.

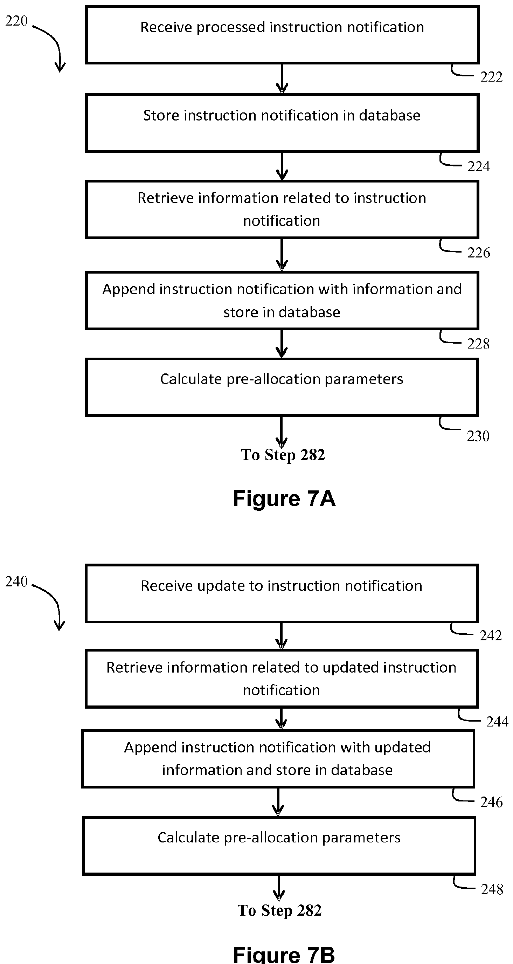

Turning now to Figure 7A, there is shown a method of operation 220 of the pre-allocation parameter calculation processor 52. Specifically, the method 220 relates to how the pre-allocation parameter calculation processor 52 operates when a new processed instruction notification is received. The method 220 begins when a processed instruction notification is received at Step 222. This is typically received by the processed instruction notification processor 200 from the instruction notification receipt processor 50. Once the instruction notification has been received, the method then stores, at Step 224, the instruction in the database 202. This storing may comprise placing all of the information parameters in the instruction notification data record 70 in the database in a state that it can be retrieved. This retrieval may be enabled by the provision of a unique identifier 74 which is either provided by the remote instruction source 12A, 12B, 12C or by the instruction notification receipt processor 50.

Following the storing of the information, the method 220 then proceeds to retrieve, at Step 226, any information which is relevant to the instruction notification from the database 202. This retrieval may be enacted by the information collection processor 204. The information collection processor 204 is configured to analyse the information parameters provided in the instruction notification data record 70 and to retrieve any information which is relevant to these parameters. For example, the information collection processor 204 may determine the source or task type of the instruction notification and retrieve any information in the database in relation to instruction records with a matching source or task type. Additionally, the information collection processor 204 may also be configured to retrieve any information in the database in relation to instruction records with a similar source or task type, where whether such parameters are similar is determined by a user defined error margin.

Once the information is retrieved, the method 220 then proceeds to append, at Step 228, this information to the instruction notification data record 70, and the appended record is stored in the database. In some scenarios, there may be no relevant information which has been retrieved at Step 226. In this instance, there will no need to append the instruction notification data record 70 and so this step does not occur. Similarly, there will be no appended record to store in the database so this step is omitted.

Following this, the method 220 then proceeds to calculate, at Step 230, pre-allocation parameters which may be used to determine where the expected instruction relating to the instruction notification should be allocated. This is performed by the parameter creation processor 206. The parameter creation processor 206 is configured to analyse the received information in the instruction notification data record 70 (appended or otherwise) in order to create the pre-allocation parameters. This analysis may comprise reviewing the instruction notification record 70 and the information appended to it by the information collection processor 204 to determine whether any of this information may be used as a pre-allocation parameter. This may include the amount of data to be processed, the expected delivery of the instruction to which the instruction notification relates and the estimated duration of the instruction. Alternatively, the parameter creation processor 206 may also review the instruction notification record 70 and the information appended to it by the information collection processor 204 and use any relevant information to calculate such pre-allocation parameters. Examples of such calculations are given above with reference to the description of an embodiment parameter creation processor 206. Once the pre-allocation parameters have been calculated, the method then proceeds to pass these onto the instruction allocation engine 54 where they are used to pre-allocate the instruction to which the instruction notification relates. The pre-allocation parameters may be appended to the instruction notification data record 70 or otherwise transmitted with the data record 70. This is described in further detail with reference to Figure 8.

Turning now to Figure 7B, there is shown a method of operation 240 of the pre-allocation parameter calculation processor 52 when it receives further information relating to an instruction notification which has previously been sent. The method of operation 240 begins when an update to an existing instruction notification is received at Step 242. This is typically received by the processed supplementary update processor 208 from the remote instruction source 208 and the update typically contains the same unique identifier provided upon transmission of the initial instruction notification or some other identifier which indicates which instruction notification the update relates to. In some embodiments, the supplementary update processor 208 is additionally configured to verify the veracity and integrity of the update to the instruction notification and only process the update to the instruction notification if the data is complete and uncorrupted. Where the veracity and integrity of the update to the instruction notification is not sufficient to allow the update to be processed to be allocated, the supplementary update processor 208 is configured to notify the remote instruction source 12A, which supplied the update, that the updates is unable to be processed.

The method then proceeds to retrieve, at Step 244, information related to the instruction notification to which the update relates. This is achieved by accessing the database 202 to which the supplementary update processor 208 is coupled and retrieving the stored instruction notification data record 70 with the same identifier as provided with the update. In some embodiments, if no such instruction notification data record 70 can be retrieved, the supplementary update processor 208 may be configured to inform the remote instruction source 12A that this instruction notification does not exist and that therefore the update is unable to be processed.

Following the retrieval of the instruction notification data record 70, the method 240 then proceeds to append, at Step 246, the instruction notification data record 70 with the updated information. This may mean the creation of a new information parameter within the data record 70. Additionally or alternatively, this may mean replacing the data in an already present information parameter with the updated data. Once the information has been appended, a copy of the newly appended instruction notification data record 70 is stored in the database 202.

Once a copy of the appended instruction notification data record 70 is stored, the method 240 proceeds to transmit the appended instruction notification data record 70 to the parameter creation processor 206, which calculates, at Step 248, the pre-allocation parameters of the instruction to which the instruction notification relates in accordance with the updated record. This is performed in the same way as Step 230 of Figure 7A. The parameters which are created as a result of the updated instruction notification supersede those generated as a result of the provision of the initial instruction notification, and any previous updates which have been provided to the PIPS 10. The pre-allocation parameters may be appended to the instruction notification data record 70 or otherwise transmitted with the data record 70.

Returning now to the elements of an embodiment of the PIPS 10 of Figures 1 and 3, Figure 8 illustrates the instruction allocation engine 54 in more detail. The instruction allocation engine 54 firstly comprises a predictive system state processor 260 which is configured to receive instruction notification data records 70 and their associated pre-allocation parameters from the pre-allocation parameter calculation processor 52. The provided pre-allocation parameters may be transmitted as part of the instruction notification data record 70 in accordance with embodiments described above. The predictive system state processor 260 is configured to utilise the pre-allocation parameters of received instructions and instruction notifications to determine an optimal efficiency allocation of instructions to be processed by the processing systems 16A, 16B, 16C. This optimal efficiency is to be calculated both for the present time and also for all known times in the future in which the processing systems 16A, 16B, 16C are expected to be in use.

For example, there may presently be four instructions provided to the PIPS 10 for immediate processing. The predictive system state processor 260 may then be configured to determine how these instructions should be allocated to the processing systems 16A, 16B, 16C to ensure that each of these instructions is processed as quickly as possible by maximising the use of the available resource in order to avoid an instruction being held in a queue to await processing. Each processing system 16A, 16B, 16C will have a finite amount of processing resource and the efficient allocation of each instruction may enable more instructions to be processed simultaneously where an inefficient allocation would prevent this from happening. Additionally, some processing systems 16A, 16B, 16C may be configured to process certain task types more efficiently and accurately than others. This may be taken into account by the predictive system state processor 260 when determining the most efficient use of each processing system 16A, 16B, 16C. It is also an aim of the present invention that the efficient allocation also minimise the total amount of processing resourced whilst efficiently processing the received instructions. Therefore, where there are multiple potential allocations which will allow all received instructions to be processed, the predictive system state processor 260 will be configured to provide an allocation solution which consumes the minimum amount of processing resource. Referring back to the example of where different processing systems 16A, 16B, 16C are configured to process certain task types more efficiently and accurately than others, even though it may be possible to allocate all instructions in a manner where a task type is allocated to a processing system 16A, 16B, 16C other than the correctly configured one, this typically consumes more resource than it needs to. The predictive system state processor 260 will therefore take this into account and allocate all instructions in such a manner that minimises the total consumed resource.

When performing the allocation, the predictive system state processor 260 will also be provided with information relating to instructions which are expected to occur at a particular point in the future. Therefore, rather than simply performing a real time allocation of received instructions at the present time, the predictive system state processor 260 also performs a predictive allocation of all instructions and expected instructions for all times that the processing systems 16A, 16B, 16C are expected to be in use. For expected instructions, the predictive system state processor 260 may create a notional instruction record which is to be treated as if it is a true instruction. This notional instruction will then be treated in the same manner as real instructions when calculated an optimal allocation. In this manner, the predictive system state processor 260 may pre-allocate an instruction which has not been received yet such that when the instruction is received it may immediately to a processing system 16A, 16B, 16C without requiring a new allocation calculation to be performed. This also minimises the likelihood that the instruction will need to be held in a queue in order to wait for a processing system 16A, 16B, 16C to become available, since its existence will be known ahead of time and an appropriate allocation of resources may be provided.

The duration of each instruction and expected instruction will also be taken into account when performing an allocation. Each instruction to be processed is likely to be processed for a different period of time. In some cases, an instruction may consume a high amount of processing resource and will be processed for a long period of time. In these examples, it may be more efficient to delay the processing of the longer instruction to allow several smaller instructions to be processed. This is particularly the case where there is insufficient to process each of the instructions simultaneously.

The information used to perform the allocation of the instructions may also include information regarding the status of processed instructions received from the processing systems 16A, 16B, 16C provided to the predictive system state processor 260. This may include informing the predictive system state processor 260 when an instruction has been fully processed, or if it has encountered an error. This information may be used to remove the relevant instruction from any future allocation calculations

The allocation to be assigned to all instructions and expected instruction records may be calculated by the employment of an appropriate minimisation algorithm. The algorithm will take into account various inputs of each instruction and notional instruction. These inputs may include the processing resource consumed by each instruction and notional instruction on each available processing system 16A, 16B, 16C, the duration of each instruction and notional instruction, the expected entry time of each notional instruction, the total available processing resource of each processing system 16A, 16B, 16C, a processing resource cost in transferring a presently executed instruction from one processing recourse 16A, 16B, 16C to another and the expected likelihood that a notional instruction will be provided at the expected time. The algorithm may comprise any such algorithm which is able to receive these inputs and produce a solution in which the greatest number of instructions and notional instructions are allocated at appropriate times whilst minimising the total processing resource consumed. Such algorithms may comprise an appropriately trained neural network within the predictive system state processor 260. Alternatively, the predictive system state processor 260 may utilise any known optimisation algorithms such as a Simplex method algorithm or Bayesian based algorithm to achieve this aim. In some embodiments, the algorithm may comprise determining the total processing resource used by each possible allocation and selecting the allocation which consumes the least processing resource that is able to allocate each of the instructions and notional instructions that are in consideration at each time frame.

In some further embodiments, the allocation calculation may also determine whether each of the instructions and notional instructions can be split and performed by multiple processing systems 16A, 16B, 16C as discrete tasks. Information regarding whether an instruction or notional instruction can be split into a plurality of discrete tasks may be provided in the information parameters supplied in the relevant instruction or instruction notification data records. This information may then be taken into account by the predictive system state processor 260 when performing allocation calculations and, where necessary, the instruction or notional instruction will be separated into available discrete tasks in order to ensure the optimal efficiency allocation of instruction to be processed.

The predictive system state processor is also coupled to the database 58 provided in the PIPS. This database is configured to hold information relating to the allocation state of each instruction presently allocated to a processing system 16A, 16B, 16C as well as the pre-allocation state of all expected future instructions (notional instructions). This is typically achieved by the predictive system state processor 260 placing updated records in the database 58 upon any change in the allocation state of any of the instructions or expected instructions. The predictive system state processor 260 is also configured to retrieve the allocation state information in order to perform the above described calculation to update the allocation state of all managed instructions and expected future or notional instructions upon receipt of updated information. This information may originate from the pre-allocation parameter calculation processor 52 in accordance with embodiments described above. Additionally, this update may originate from the allocation recalculation processor 60 upon determination that there is an update of information for an instruction that has already been provided. This is discussed in further detail below with reference to Figure 12. Updates may additionally be received directly from the processing systems 16A, 16B, 16C. These updates typically comprise notifications that an instruction has completed processing or has otherwise encountered an error.

The predictive system state processor 260 is additionally coupled to a re-allocation engine 262. The re-allocation engine 262 is configured to receive commands from the predictive system state processor 260 relating to the re-allocation of instructions being processed by the processing systems 16A, 16B, 16C upon determination by the predictive system state processor 260 that a re-allocation is necessary in order to maintain optimum efficiency of the processing of all instructions at the present time. If it is determined that a reallocation will be required at a future time frame, then no command is issued to the reallocation engine 262 and instead the records in the database 58 are just updated accordingly. If however it is determined that a re-allocation is required, then the re-allocation will re-allocation engine 262 will receive a command from the predictive system state processor 260 and will instruct the appropriate processing systems 16A, 16B, 16C to transfer the processed instruction from one processing system to another. In some embodiments, it may not be possible to immediately reallocate the instructions being processed, for example due to a requirement that a particular element of the processing that is in progress cannot be halted. In these scenarios, the re-allocation engine 262 may receive a notification from the relevant processing system 16A, 16B, 16C that a delay must be introduced and the command to transfer the instruction being processed may be held until such a time that it can be enacted.

The predictive system state processor 260 is additionally configured to perpetually monitor the allocation state of the instructions and notional instructions in order to determine when an instruction needs to be allocated to a processing system 16A, 16B, 16C. In accordance with the embodiments described above, it may be determined that an instruction is to be reallocated at a future date. The predictive system state processor 260 is configured to monitor when such a reallocation of an instruction is necessary. This may be done by periodic or persistent communication with the database 58 and upon determination that a reallocation is necessary, an appropriate command is sent to the re-allocation engine 262 to reallocate the corresponding instruction or instructions accordingly. In other embodiments, the predictive system state processor 260 may provide the re-allocation engine 262 with a time delayed command to reallocate the corresponding instruction or instructions. This time delayed command will then be held within the re-allocation engine 262 until such a time as the command should be enacted.

The instruction allocation engine 54 is further provided with an instruction processing module 264 which is coupled to the predictive system state processor 260. The instruction processing module 264 is configured to receive instructions to be enacted which are typically received by the instruction receipt handler 56. The instructions themselves are provided by the remote instruction source 12A to the instruction receipt handler 56. Upon receipt of an instruction, the instruction processing module 264 is configured to send an information request to the predictive system state processor 260 requesting the allocation state of the received instruction. The instruction may be identified by the provision of the unique identifier assigned to that instruction. The predictive system state processor 260 is then configured to retrieve the allocation state of the provided instruction from the database 58 and this is then transmitted to the instruction processing module 264. The instruction is then allocated to the processing system 16A, 16B, 16C to which it is assigned by the instruction processing module 264. If it is determined that the received instruction is to be allocated at a later time frame, the instruction record may be placed in a database 266 which is coupled to the instruction processing module 264 until the instruction record 90 may be assigned to a processing system 16A, 16B, 16C. The instruction record 90 may be appended with an expected processing time stamp and upon determination that this time has been reached, the instruction will then be appropriately allocated.

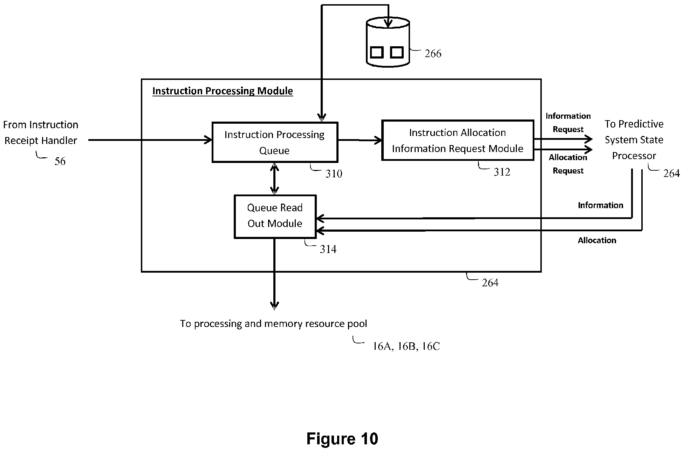

In some embodiments of the present invention, it may be possible that the instruction allocation engine 54 receives instructions that have no corresponding instruction notifications. As a result, the instruction will have no pre-allocation information associated with it. In some embodiments of the invention, the requested instruction may simply be rejected. In other embodiments, the PIPS 10 will be configured to perform an allocation of the instruction in real time. In these embodiments, the instruction processing module 264 may be configured to transmit information parameters to the predictive system state processor 260 so that the instruction may be allocated in accordance with the allocation state of the managed instructions and notional instructions. The information received by the predictive system state processor 260 may then be stored in the database 58 in accordance with embodiments described above. The instruction will then be allocated by the instruction processing module 264 in the same manner as described above. In yet further embodiments, the instruction processing module 264 may additionally be provided with an overflow queue in which instructions with no pre-allocation information are stored. These instructions will then be assigned to a processing resource 16A, 16B, 16C when sufficient resource is available, in accordance with known queuing systems. Further details regarding the operation of the instruction processing module are discussed below with reference to Figure 10.

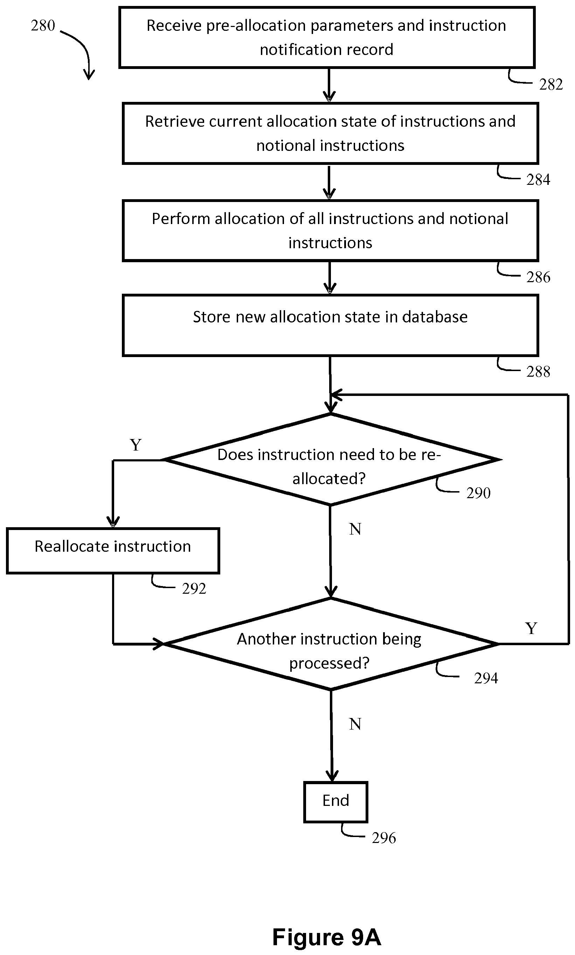

Turning now to Figure 9A, there is shown a method of operation 280 of the instruction allocation engine 54. Specifically, the method relates to how the instruction allocation engine 54 operates when it receives an instruction notification record and associated pre-allocation parameters. The method 280 begins when the instruction allocation engine receives, at Step 282, an instruction notification record with associated pre-allocation parameters. These are typically received from the pre-allocation parameter calculation processor 52 by the predictive system state processor 260. Once these have been received, the method 280 then proceeds by retrieving, at Step 284, the current allocation state of all instructions and notional instructions presently being managed by the PIPS 10. This information is typically stored in the database 58 which is coupled to the predictive system state processor 260.

Once the retrieval has occurred, the method of operation 280 proceeds by performing, at Step 286, an allocation of all instructions and notional instructions being managed by the PIPS 10 in order to provide an optimum allocation to processing systems 16A, 16B, 16C in accordance with the embodiments described above. The allocation may be performed using any of the techniques described above with reference to Figure 8. Alternatively, the allocation may be performed using any suitable algorithm which is able to calculate an optimal allocation. Once the new allocation has been calculated, the new allocation state of each of the instructions and notional instructions is stored, at Step 288, in the database 58. This can then be retrieved at a later date when further allocation calculations are required.

Once the allocation states are stored, the method 280 then proceeds by determining, at Step 290, whether a first instruction which is undergoing processing needs to be reallocated. This is performed for all instructions which are currently being processed by a processing system 16A, 16B, 16C and in this embodiment is performed in series for each instruction. If it is determined that the instruction does need to reallocated at the present time, the method proceeds to reallocate, at Step 292, the instruction from a processing system 16A, 16B, 16C that it is currently being processed by to another processing system 16A, 16B, 16C. This is achieved by sending a command to the re-allocation engine 262 in accordance with the embodiments described above.

If it is determined, at Step 290, that re-allocation of the instruction being considered is not required, then the method 280 proceeds to then determine, at Step 294, whether there is another instruction currently being processed which may require re-allocation. Step 294 is also reached following the reallocation of an instruction at Step 292. If it is determined that there is another instruction being processed, then the method 280 then proceeds to return to Step 290, where it is determined whether the new instruction requires re-allocation. Alternatively, if it is determined at Step 294 that there are no further instructions being processed, then the method proceeds to end at Step 296. The embodiment being illustrated in Figure 9A describes a scenario in which consideration of whether each instruction requires re-allocation is performed in series. In alternate embodiments the instruction allocation engine 54 may simultaneously consider whether all instructions require re-allocation in parallel. In this scenario, the method 280 of Figure 9A is restructured accordingly such that Steps 290 and 292 considers all instructions simultaneously and Step 294 is omitted.

It is to be appreciated that the method of operation 280 of Figure 9A relates to the provision of pre-allocation parameters and an instruction notification record from the pre-allocation parameter calculation processor 52. However, it is possible that the instruction allocation engine 54 also receives allocation parameters and an instruction record from the allocation recalculation processor 60. The method by which these are used to reallocate instructions and notional instructions is analogous to the method of operation 280 of Figure 9A, with the allocation parameters and instruction record replacing the pre-allocation parameters and instruction notification records respectively. For the purposes of brevity, the method of how such instruction records and allocation parameters are used to re-allocate an instruction is not expanded upon here.

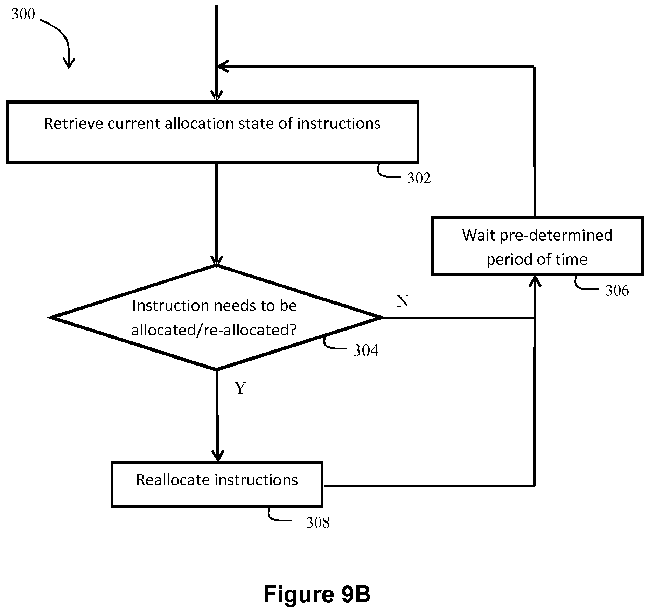

With reference to Figure 9B, there is shown a method of operation 300 of the predictive system state processor 260 to persistently monitor the allocation state of instructions and re-allocate the instruction as necessary. The method 300 begins by retrieving, at Step 302, the current allocation state of instructions which are being processed by the PIPS 10. This retrieval may be initiated at any time subsequent to an instruction beginning processing by a processing system 16A, 16B, 16C. In some embodiments, the retrieval may occur at a time pre-determined by a user of the PIPS 10. Following the retrieval of the current allocation state, it is then determined, at Step 304, whether any of the instructions being processed needs to be re-allocated in accordance with the reallocation calculations performed by the predictive system state processor 260, where this calculation is performed as described in embodiments given above. For example, if an instruction is presently being processed by a first processing system 16A, but it has been determined that at the time of retrieval that the instruction now needs to be reallocated to processing system 16B, it will be determined that the instruction now needs to be reallocated.

If it is determined that there are no instructions that presently need to be reallocated, the method 300 then proceeds to wait, at Step 306, for a predetermined period of time before returning to Step 302, where the current allocation state of the instructions is retrieved again at Step 302. This predetermined period of time may be set by a user of the PIPS 10. In some embodiments, this period of time may be negligible, to the point where the allocation state of the instructions is constantly being retrieved and monitored in real time. This may be advantageous where the allocation state of the instructions is being constantly amended and therefore constant monitoring is useful in ensuring that the allocation of instructions is at optimal efficiency. This may arise where there are a large number of instructions and instruction notifications being received by the PIPS.

Returning to Step 304, if it is determined that one or more instructions need to be reallocated at the present time, the method proceeds to reallocate, at Step 308, the instruction or instructions from a processing system 16A, 16B, 16C that it is currently being processed by to another processing system 16A, 16B, 16C. This is achieved by sending a command to the re-allocation engine 262 in accordance with the embodiments described above. The presently described method 300 performs this reallocation for all instructions in parallel, although it is to be appreciated that each of the instructions may be considered in series. Once the instruction or instructions have been reallocated, the method then proceeds to Step 306 where the method waits for a predetermined period of time before retrieving the allocation state of all instructions, in accordance with the description given above.

Turning now to Figure 10, there is shown in greater detail the instruction processing module 264 of Figure 8. The instruction processing module is first provided with an instruction processing queue 310, which is configured to receive instructions to be enacted which are typically received by the instruction receipt handler 56. The instructions themselves are provided by the remote instruction source 12A to the instruction receipt handler 56. The instruction processing queue 310 is configured to store instructions that have been received from the instruction receipt handler 56 until it is decided what action is to be taken with regards to the instruction. This action may comprise allocating the instruction to a processing system 16A, 16B, 16C in accordance to a pre-allocation that has been assigned to the instruction. The action may also comprise determining that the instruction has no pre-allocation associated with it and that an allocation for the instruction is now required. Alternatively, the action may simply be to determine that no pre-allocation has been performed but that the instruction may be instantly allocated to an available processing system 16A, 16B, 16C. This may be the case when an instruction is received which consumes a small amount of processing resource and therefore it is most efficient to simply immediately assign the instruction to a processing system 16A, 16B, 16C to be processed.

The instruction processing queue 310 is communicably coupled to an instruction allocation information request module 312. The instruction allocation information request module 312 is configured to receive requests from the instruction processing queue 310 for information relating to the allocation of a received instruction. This typically comprises requesting information relating to any pre-allocation of the received instruction that has been calculated by the predictive system state processor 264. To that end, the instruction allocation information request module 312 is configured to receive these requests from the instruction processing queue 310 and to send a suitably configured request to the predictive system state processor 264 for this information. The predictive system state processor 264 will then retrieve the pre-allocation status of the notional instruction to which the request relates, from the database 58.

The instruction processing module 264 is further provided with a queue read out module 314 which is communicably coupled to the instruction processing queue 310. The queue read out module 314 is configured to receive information from the predictive system state processor 264 relating to an instruction that has been provided to the instruction processing queue 310. Upon receipt of the information, the queue read out module is configured to communicate with the instruction processing queue 310 in order to determine the action to be taken in respect of the received instruction. If the information provided indicates that the instruction in question has a pre-allocation associated with it and that the instruction may be allocated to a processing system 16A, 16B, 16C. If this is the case, the queue read out module 314 will send a notification to the instruction processing queue 310 that the instruction data record should be passed to the queue read out module 314 and removed from the instruction processing queue 310. The instruction will then be passed to the appropriate processing system 16A, 16B, 16C.

If the information provided by the predictive system state processor 264 indicates that the instruction has a pre-allocation associated with it but that the instruction is not to be allocated at this time, the queue read out module 314 may send a notification to the instruction processing queue 310 that the instruction is to be held in the instruction processing queue until the appropriate time. In this case, the instruction may be appended with the time in which it is to be allocated and the processing system 16A, 16B, 16C it is to be allocated to, and will then proceed to wait in the instruction processing queue 310 until this time. At the appropriate time, the instruction is then provided to the queue read out module 314 to be allocated.

In some embodiments, when an instruction which has been held in the instruction processing queue 310 is due to be allocated, it is possible that the allocation information may have changed in the meantime due to other updates in the system. Therefore in some optional embodiments, when an instruction is due to be allocated, a subsequent request for information may be transmitted to the predictive system state processor 264 by the instruction allocation information request module 312 to determine whether there have been any updates to the allocation of the instruction. Where the allocation needs to be delayed, the instruction will continue to be held until the appropriate time. Where the processing system 16A, 16B, 16C to which the instruction is to be allocated changes, the instruction will be allocated accordingly. In further embodiments, once an initial information request has been provided to the predictive system state processor 264 in respect of a received instruction, the predictive system state processor 264 may be configured to automatically transmit any information regarding updates to the allocation state of that instruction to the queue read out module 314 as and when the update occurs. This information will then be used to update the time of allocation and allocated resource accordingly.

If the information provided by the predictive system state processor 264 indicates that the instruction has no pre-allocation associated with it, then the queue read out module 314 may be configured to communicate with the instruction processing queue 310 to indicate this. In some embodiments, the instruction processing queue 310 may then be configured to simply not process the instruction. In other embodiments, the instruction processing queue 310 may be configured to request an allocation of the instruction. This is achieved by sending a request with the required information parameters of the instruction to the instruction allocation information request module 312 which are then transmitted to the predictive system state processor 264. The predictive system state processor 264 will then proceed to calculate the allocation of the received instruction on the basis of these information parameters. It is to be appreciated in this instance that the calculation of pre-allocation parameters is not required, since the instruction data record that is provided will contain sufficient information to allow it to be processed and consequently, sufficient information for the instruction to be allocated. The calculation of the allocation of the instruction in conjunction with all other instructions and notional instructions is performed in accordance with embodiments described above. Following the calculation of the allocation of the instruction, the details of the allocation (i.e. when and where the instruction should be allocated to) are transmitted to the queue read out module 314 which proceeds to allocate the instruction in accordance with embodiments described above.

In yet further embodiments, if it is determined that the instruction has not been pre-allocated, the instruction processing queue 310 may simply be configured to hold the instruction until such a time as a processing system 16A, 16B, 16C becomes available. This availability may be determined by communication by the queue read out module 314 with the processing systems 16A, 16B, 16C and the instruction processing queue 314. Upon determination that there is a processing system 16A, 16B, 16C available to process the instruction, the instruction is passed to the queue read out module 314 and then subsequently to the appropriate processing system 16A, 16B, 16C.

In some embodiments, the instruction processing queue 310 may be configured such that it only holds instructions which are awaiting information regarding their pre-allocation status. If it is determined that the instruction has no pre-allocation status or that the instruction is not to be allocated until a later time, then the instruction record may be removed from the instruction processing queue 310 and stored in a database 266 to which the instruction processing queue 310 is coupled. This may be advantageous in preventing an excess of instructions being stored in the queue which may lead to potentially pre-allocated instructions sitting in the back of a queue behind instructions awaiting allocation. In such embodiments, the instruction record is stored in the database until such a time as an allocation becomes available. At this point, the instruction record is retrieved and then allocated to the appropriate processing system 16A, 16B, 16C in accordance with this allocation.

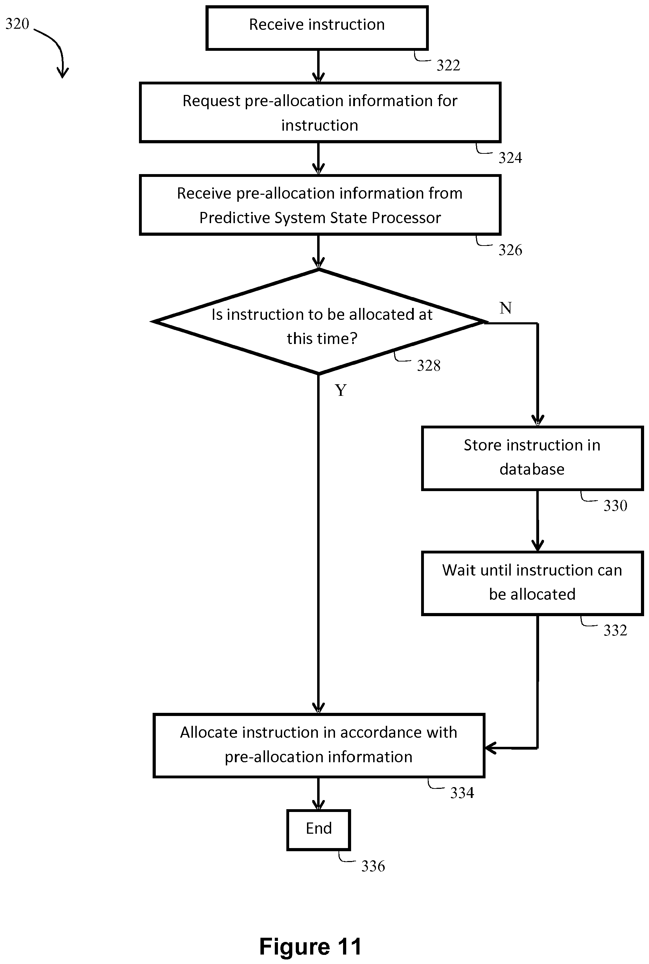

Turning now to Figure 11A, there is shown a method of operation 320 of the instruction processing module 264. Specifically, the method 320 illustrates the process by which a received instruction gets allocated to a processing system 16A, 16B, 16C where the instruction has been pre-allocated to a processing system 16A, 16B, 16C. The method 320 begins when an instruction is received, at Step 322, by the instruction processing queue 310 from the instruction receipt handler 56. In this embodiment it is assumed that the instruction which has been received will have previously have an associated instruction notification which has previously been sent to the PIPS 10 and that therefore there will have previously been a pre-allocation calculation performed in respect of this expected instruction.

Following the receipt of the instruction, the method proceeds by requesting, at Step 324, the pre-allocation information for the received instruction. This typically comprises the instruction processing queue 310 providing a request to the instruction allocation information request module 312 for this information and will comprise sending at least the unique identifier of the instruction such that the matching pre-allocation of the notional instruction can be retrieved. This is then configured to be sent to the predictive system state processor 264. In some embodiments, additional information parameters may be sent, where the instruction contains updated information to that which has previously been provided. This additional information may then be used in an allocation calculation.

Returning to the method 320 of Figure 11, once the information has been requested from the predictive system state processor 264, the database 58 will be accessed and the requested information will be received, at Step 326 by the queue read out module 314. This information typically comprises the processing system 16A, 16B, 16C that the instruction is to be allocated to and the time at which it is due to be allocation As mentioned above, in the embodiment described by Figure 11, it is assumed that there will always be a pre-allocation for a particular instruction. In other embodiments in which this is not the case, rather than having pre-allocation information being sent back, the predictive system state processor may send back an error message informing the queue read out module 314 that no information is available. This may then cause the instruction to be rejected. Alternatively, the instruction processing module 264 may then request that an allocation calculation be performed in respect of the instruction.

Returning once more to the method 320 of Figure 11, one the pre-allocation information has been received, the queue read out module 314 then proceeds to determine, at Step 328, whether the instruction is to be allocated at this time. In some circumstances, the instruction which has been received may be pre-allocated to a processing system 16A, 16B, 16C at a time frame ahead of the time that the instruction has been received (for example, as the optimal efficiency for processing all instructions requires that the present instruction is processed after other instructions have finished processing). In this case, it will be determined that the instruction is not to be allocated at this time and that the instruction should wait for its allocated initialisation time. In this case, the method 320 proceeds to store, at Step 330, the instruction in the database 266. This may be achieved by the queue read out module 314 instructing the instruction processing queue 310 to remove the instruction from the queue and store it in the database. The method then proceeds to wait, at Step 332 until the time at which the instruction is to be allocated. Following this, the method then proceeds to allocate, at Step 334, the instruction to one of the processing systems 16A, 16B, 16C in accordance with the provided pre-allocation information. This step is also reached if it is determined at Step 328 that the instruction is to be allocated upon receipt of the instruction in accordance with the received pre-allocation information. Where the instruction data record has been previously stored in the database 266, this allocation may be achieved by configuring any of the queue read out module 314 or the instruction processing queue 310 to first retrieve the instruction data record from the database 266, before providing it to the appropriate processing system 16A, 16B, 16C.

Turning now to Figure 12, there is shown in more detail the allocation recalculation processor 60 of the PIPS 10 of Figure 3. The allocation recalculation processor 60 is configured to receive updates from a remote instruction source 12A, 12B, 12C in relation to instructions which have already been supplied to the PIPS 10. The allocation recalculation processor 60 is also configured to calculate new allocation parameters which may be used in calculations to reallocate the previously received instructions in accordance with the updated information. This aids in ensuring that optimal processing efficiency is maintained in light of the updated information. The allocation recalculation processor 60 is analogous to the pre-allocation parameter calculation processor 52 described in embodiments above in that it calculates parameters to be used in a reallocation calculation and provides these to the instruction allocation engine 54.

The allocation recalculation processor 60 is firstly provided with an instruction update processor 340. The instruction update processor 340 is configured to receive updated information from a remote instruction source 12A, 12B, 12C in respect of an instruction previously provided to the PIPS 10. In some embodiments, the instruction update processor 340 is configured to verify the veracity and integrity of updated information and only process the updated information if the data is complete and uncorrupted. Where the veracity and integrity of the updated information is not sufficient to allow the updated information to be processed, the instruction update processor 340 is configured to notify the remote instruction source 12A, which supplied the updated information, that the updated information is unable to be processed.

The instruction update processor is also configured to retrieve required information from the database 58 which contains information regarding the allocation status of all instructions and notional instructions. The information that is to be retrieved may be determined upon consideration of the information parameters provided in the updated information provided. For example, the updated information may simply comprise the identifier of the instruction to which the update relates and a single information parameter that has been updated. This may not be sufficient to provide parameters for the instruction allocation engine 54 to produce an allocation calculation. Therefore, the instruction update processor 340 may be configured to retrieve all remaining information parameters relating to the updated instruction. The instruction update processor 340 may also be configured to retrieve the allocation status of the instruction and any information regarding how much of the instruction has presently been processed. The instruction update processor 340 is analogous to the information collection processor 204 of Figure 6.

The allocation recalculation processor 54 is further provided with an instruction parameter processor 342 which is coupled to the instruction update processor 340. The instruction parameter processor 342 is configured to receive information retrieved by the instruction update processor 340 and to use this information to generate parameters that can be used to assign an allocation to the instruction. The information which is received is analysed and may be used in calculations to create these parameters. Alternatively, the provided information may be determined as being a parameter suitable to aid in assigning an allocation without any further calculation.

For example, an update to the amount of information regarding the amount of data to be processed may be provided to the instruction update processor 304. This may be then used in combination with known information regarding the capabilities of a processor and the amount of data processed already in order to determine the new expected duration of the instruction. Alternatively, the new expected duration may already be provided as part of the information which is transmitted to the instruction update processor 304. In this instance, no further calculation will be required. Once the allocation parameters have been calculated, they are passed onto the instruction allocation engine 54 where a reallocation of the updated instruction and all other instructions and notional instructions is performed, in accordance with embodiments discussed above. The instruction parameter processor 342 is analogous to the parameter creation processor 206 of Figure 6.

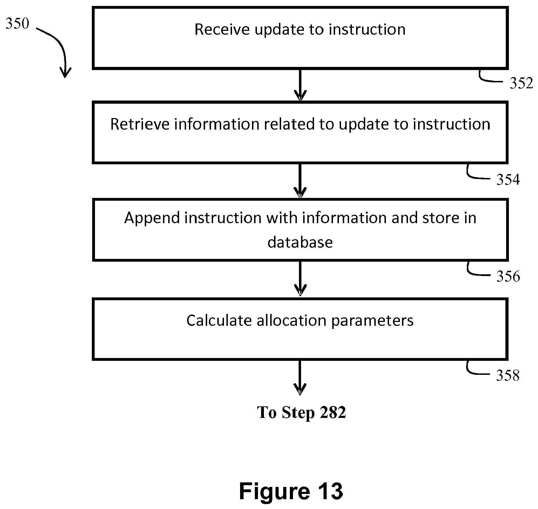

Turning now to Figure 13, there is shown a method of operation 350 of the allocation recalculation processor 60 of Figure 12. In particular, the method 350 illustrates how the allocation recalculation processor 60 responds to the receipt of an update to an instruction that has been provided to the PIPS 10. The method 350 begins when the allocation recalculation processor 60 receives, at Step 352, an update to an instruction. This is typically received by the instruction update processor 340 from the remote instruction source 12A, 12B, 12C and the update typically contains the same unique identifier provided upon transmission of the initial instruction or some other identifier which indicates which instruction the update relates to.

Following receipt of the instruction, the method 350 proceeds by retrieving, at Step 354, information related to the received update to the instruction. This is achieved by accessing the database 58 to which the instruction update processor 340 is coupled and retrieving the stored instruction data record 70 with the same identifier as provided with the update. In some embodiments, if no such instruction data record can be retrieved, the instruction update processor 340 may be configured to inform the remote instruction source 12A, 12B, 12C that this instruction does not exist and that therefore the update is unable to be processed.

Following the retrieval of the instruction data record, the method 350 then proceeds to append, at Step 356, the instruction data record with the updated information. This may mean the creation of a new information parameter within the data record. Additionally or alternatively, this may mean replacing the data in an already present information parameter with the updated data. Once the information has been appended, a copy of the newly appended instruction data record is stored in the database 58.

Once a copy of the appended instruction data record is stored, the method 350 proceeds to transmit the appended instruction data record to the instruction parameter processor 342, which calculates, at Step 358, the allocation parameters of the instruction in accordance with the updated record.

The instruction parameter processor 342 is configured to analyse the received information in the appended instruction data record in order to create the allocation parameters. This analysis may comprise reviewing the instruction record and the information appended to it by the instruction parameter processor 340 to determine whether any of this information may be used as an allocation parameter. This may include an update to the amount of data to be processed or an update to the estimated duration of the instruction. Alternatively, the instruction parameter processor 342 may also review the instruction record and the information appended to it by the instruction update processor 340 and use any relevant information to calculate such allocation parameters. Examples of such calculations are given above with reference to the description of an embodiment parameter creation processor 206. Once the allocation parameters have been calculated, the method 350 then proceeds to pass these onto the instruction allocation engine 54 where they are used to allocate the instruction to which the instruction notification relates. The allocation parameters may be appended to the instruction data record or otherwise transmitted with the data record.

The above embodiments have been described in the context of a PIPS 10 arranged to receive instruction notifications in advance of receiving a corresponding instruction. It is to be appreciated however that in further embodiments, the PIPS 10 may also be suitably adapted to receive instructions without a corresponding instruction and to allocate and reallocate these instructions accordingly. In such embodiments, the PIPS 10 may comprise only those features necessary for carrying out such functionality. Such an embodiment may comprise the instruction allocation engine 54 arranged so as to be able to receive instructions from a remote instruction source 12A, 12B, 12C and to allocate these instructions to one of the processing systems 16A, 16B, 16C, where the instruction allocation engine 54 comprises at least the predictive system state processor (260), the reallocation engine (262) and the instruction processing module (264), configured to allocate a new instruction in accordance with the parameters included in the instruction record and the allocation status of any existing instructions presently being processed. The functionalities of these features are in accordance with embodiments described above.

Having described several exemplary embodiments of the present invention and the implementation of different functions of the device in detail, it is to be appreciated that the skilled addressee will readily be able to adapt the basic configuration of the system to carry out described functionality without requiring detailed explanation of how this would be achieved. Therefore, in the present specification several functions of the system have been described in different places without an explanation of the required detailed implementation as this not necessary given the abilities of the skilled addressee to code functionality into the system.

Furthermore, it will be understood that features, advantages and functionality of the different embodiments described herein may be combined where context allows.

## Claims

1. A dynamic instruction processing system (10) for processing and allocating instructions (110) continuously in real time, wherein the system is arranged to receive instructions (110) from a remote instruction source (12A, 12B, 12C) and each instruction comprises a set of variable parameters (90) which at least determine a task action (92) to be processed and a data set (94) upon which the task action (92) operates, the dynamic instruction processing system (10) including an instruction allocation engine (54) for allocating a received instruction (110) to one of a plurality of processing systems (16A, 16B, 16C) operatively coupled to the dynamic instruction processing system (10), the instruction allocation engine (54) being adaptive to a state of each processing system to determine how many processing systems (16A, 16B, 16C) are available to comprise the plurality of processing systems which are available for allocation of the instruction, the instruction allocation engine (54) comprising:
a predictive system state processor (260) operatively coupled to the plurality of processing systems (16A, 16B, 16C), the predictive state processor (260) being arranged to:
continuously monitor in real time the current status of each of a plurality of existing instructions previously allocated to and being processed by the plurality of processing systems (16A, 16B, 16C) to determine when any change of status has occurred;
carry out an allocation calculation to determine an appropriate processing system of the plurality of processing systems (16A, 16B, 16C) to allocate the received instruction (110) to, based on at least one of the set of variable parameters (90) of the received instruction, the current status of the plurality of existing instructions and the state of each processing system; and
calculate a reallocation of one of the plurality of existing instructions which has not been fully executed to another one of the plurality of processing systems (16A, 16B, 16C) based on at least one of the set of variable parameters (90) of the one of the plurality of existing instructions upon determination that one of a group of reallocation events has occurred, the group of reallocation events comprising:
a) a new instruction (110) has been received by the instruction allocation engine (54);
b) an update to one of the set of variable parameters (90) of any one of the plurality of existing instructions has been received by the instruction allocation engine (54) from the remote instruction sources (12A, 12B, 12C), the update changing one of the set of variable parameters (90) of any one of the plurality of existing instructions; and
c) the state of one or more of the plurality of processing systems (16A, 16B, 16C) has changed or the number of available processing systems of the plurality of processing systems (16A, 16B, 16C) currently available to the instruction allocation engine (54) for allocation has changed;
a reallocation engine (262) configured to receive commands from the predictive system state processor (260) to reallocate one or more existing instructions and to instruct the reallocation of the existing instructions between different ones of the plurality of processing systems (16A, 16B, 16C); and
an instruction processing module (264) arranged to receive new instructions (110) from the remote instruction source (12A, 12B, 12C), where the instruction processing module (264) is operatively coupled to the predictive system state processor (260) and upon receipt of an instruction (110) is configured to request an allocation calculation of a received instruction (110) from the predictive system state processor (260) and to allocate the received instruction (110) to one of the plurality of processing systems (16A, 16B, 16C) in accordance with the allocation calculation received from the predictive system state processor (260).

2. The dynamic instruction processing system (10) of Claim 1, wherein the instruction processing module (264) further comprises an instruction processing queue (310), and the predictive system state processor (260) is configured to carry out an allocation calculation and forward results of the allocation calculation to the instruction processing module (264), the allocation calculation determining an appropriate processing system of the plurality of processing systems (16A, 16B, 16C) to allocate the received instruction (119) to and an appropriate time at which the received instruction (110) should be allocated, and the instruction processing module (264) is arranged to store the received instruction in the instruction processing queue (310) until it is to be allocated in accordance with the results of the allocation calculation.

3. The dynamic instruction processing system (10) of Claim 2, wherein the instruction processing module (264) is arranged to receive an update to one of the set of variable parameters (90) of an instruction awaiting allocation in the instruction processing queue (310) and upon receipt of the update, the instruction processing module (264) is configured to request an allocation calculation of the updated instruction in accordance with the updated variable parameter (90).

4. The dynamic instruction processing system (10) of any previous claim, wherein the reallocation engine (262) is further configured to receive notifications from two or more processing systems (16A, 16B, 16C) between which the reallocation of one or more existing instructions is to be enacted, indicating whether the reallocation of the one or more existing instructions is possible currently and if the reallocation is not possible currently, the reallocation engine (262) is configured to introduce a delay in the reallocation until such time as the reallocation is possible.

5. The dynamic instruction processing system (10) of any previous claim, wherein the predictive system state processor (260) is configured to determine from the set of variable parameters (90) whether a received instruction (110) or one of the plurality of existing instructions can be split into a plurality of discrete tasks and where the received instruction or one of the plurality of existing instructions can be split, the predictive system state processor (260) is configured to carry out an allocation calculation or a reallocation calculation respectively for each of the plurality of discrete tasks.

6. The dynamic instruction processing system (10) of any previous claim, wherein the predictive system state processor (260) is arranged to carry out the allocation calculation and the reallocation calculation using a minimisation algorithm, the minimisation algorithm operating, in use, to allocate the received instruction (110) and reallocate the one of the existing instructions to processing systems (16A, 16B, 16C) to minimise the total amount of processing resource consumed in processing the received instruction (110) and the plurality of existing instructions.

7. The dynamic instruction processing system (10) of (any previous claim), further comprising:
a pre-allocation parameter calculation processor (52) operatively coupled to the instruction allocation engine (54), the pre-allocation parameter calculation processor (52) comprising:
a processed instruction notification processor (200) configured to receive instruction notifications (70) from the remote instruction source (12A, 12B, 12C) prior to the receipt of corresponding instructions, where each instruction notification (70) comprises a set of variable parameters (90) and static parameters (72), with one of the static parameters comprising an instruction notification record identifier (74); and
a parameter creation processor (206) arranged to calculate, using at least one of the variable parameters (90) or the static parameters (72), a set of pre-allocation parameters for the received instruction notification (70) which at least determine an expected task action (92) to be processed, an expected data set (94) upon which the task action (92) operates and an expected time of receipt of the instruction (110) to which the instruction notification (70) relates; and
a database (58) configured to store information records;
wherein upon receipt of the pre-allocation parameters, the predictive system state processor (260) is arranged to:
create a notional instruction and to carry out a pre-allocation calculation using the pre-allocation parameters to determine an appropriate processing system of the plurality of processing systems (16A, 16B, 16C) to allocate a notional instruction to, and an appropriate time at which the notional instruction should be allocated; and
store information records relating to the allocation status of notional instructions in the database (58) provided; and
the instruction processing module (264) is arranged, upon receipt of a new instruction (110) from the remote instruction source (12A, 12B, 12C), to request information relating to the allocation status of notional instructions and to compare an identifier (74) of the new instruction with previously received instruction notification identifiers (74) of the notional instructions; and if a corresponding pre-allocated notional instruction has been received, to allocate the received instruction (110) to one of the plurality of processing systems (16A, 16B, 16C) in accordance with the allocation of the notional instruction.

8. The dynamic instruction processing system (10) of Claim 7, wherein the pre-allocation parameter calculation processor (52) comprises a supplementary update processor (208) arranged to receive an update to the set of variable parameters (90) of an existing instruction notification from the remote instruction sources (12A, 12B, 12C), the update changing one of the set of variable parameters (90) of the existing instruction notification, and to recalculate the set of pre-allocation parameters for the existing instruction notification (70) to which the update relates.

9. The dynamic instruction processing system (10) of Claim 7 or 8, wherein the pre-allocation parameter calculation processor (52) comprises:
a data store (202) arranged to store parameters relating to the allocation of notional instructions which have been allocated; and store parameters relating to the processing of the instructions to which the notional instructions correspond, where the parameters are provided by the instruction allocation engine (54); and
an information collection processor (204) arranged to operate with the parameter creation processor (206) to access and use the parameters stored in the data store (202) relating to the allocation of notional instructions which have been allocated and the parameters stored in the data store (202) relating to the processing of the instructions to which the notional instructions correspond, when performing the calculation of pre-allocation parameters of a received instruction notification (70).

10. The dynamic instruction processing system (10) of Claim 9 as dependent upon Claim 8, wherein the supplementary update processor (208) is arranged to operate with the parameter creation processor (206) to access and use the parameters stored in the data store (202) relating to the allocation of notional instructions which have been allocated and the parameters stored in the data store (202) relating to the processing of the instructions to which the notional instructions correspond, when performing the calculation of pre-allocation parameters of an updated instruction notification (70).

11. The dynamic instruction processing system (10) of any of Claims 7 to 10, wherein the group of reallocation events further comprises:
d) an update to one of the set of variable parameters (90) of one of the existing instruction notifications has been received by the pre-allocation parameter calculation processor (52) from the remote instruction sources (12A, 12B, 12C), the update changing one of the set of variable parameters (90) of the existing instruction notification.

12. The dynamic instruction processing system (10) any of Claims 7 to 11, wherein the predictive system state processor (260) is additionally arranged to reallocate any pre-allocated notional instruction which have previously been pre-allocated upon determination that one of the group of reallocation events has occurred.

13. The dynamic instruction processing system (10) of any previous claim, further comprising the plurality of processing systems (16A, 16B, 16C).

14. A method of processing and allocating instructions received from a remote instruction source (12A, 12B, 12C) continuously in real time, wherein each instruction comprises a set of variable parameters (90) which at least determine a task action (92) to be processed and a data set (94) upon which the task action (92) operates, the method including using a plurality of processing systems (16A, 16B, 16C) to process the instructions, the method comprising:
initiating an allocation calculation upon receipt of an instruction (110);
calculating, based on at least one of the set of variable parameters of the instruction, the current status of any existing instructions and the state of each processing system (16A, 16B, 16C), an appropriate processing system of the plurality of processing systems (16A, 16B, 16C) to allocate the received instruction (110) to;
allocating the received instruction to a processing system of the plurality of processing systems (16A, 16B, 16C) in accordance with the determined allocation;
processing the received instruction (110) in accordance with the provided set of variable parameters (90);
receiving the results of the processed instruction (110); and
providing the results of the processed instruction (110) to the remote instruction source (12A, 12B, 12C);
wherein the processing step comprises:
i) initialising the processing of the received instruction (110) when it is allocated to a processing system (16A, 16B, 16C);
ii) monitoring in real time the current status of each of a plurality of existing instructions previously allocated to and being processed by the plurality of processing systems (16A, 16B, 16C) to determine when any change of status has occurred;
iii) calculating a reallocation of one or more of the plurality of existing instructions which has not been fully executed to another one of the plurality of processing systems (16A, 16B, 16C) based on the set of variable parameters (90) of the plurality of existing instructions upon determination that one of a group of reallocation events has occurred, the group of reallocation events comprising:
a) a new instruction (110) has been received from a remote instruction source (12A, 12B, 12C);
b) an update to one of the set of variable parameters (90) of one of the plurality of existing instructions has been received from the remote instruction sources (12A, 12B, 12C), the update changing one of the set of variable parameters (90) of any one of the plurality of existing instructions; and
c) the state of one or more of the plurality of processing systems (16A, 16B, 16C) has changed or the number of available processing systems of the plurality of processing systems (16A, 16B, 16C) currently available for allocation has changed;
iv) reallocating the one or more of the plurality of existing instructions to another processing system (16A, 16B, 16C) in accordance with the results of the reallocation calcu lation;
repeating steps ii) to iv) until the processing of the received instruction (110) has been completed.

15. The method of Claim 14, the method further comprising:
receiving an instruction notification (70) prior to the receipt of a corresponding instruction (110), where each instruction notification (110) comprises a set of variable parameters (90) and static parameters (72), wherein one of the static parameters comprises an instruction notification record identifier (74);
calculating using at least one of the variable parameters (90) or the static parameters, a set of pre-allocation parameters for the received instruction notification (70) which at least determine an expected task action (92) to be processed, an expected data set (94) upon which the task action (92) operates and an expected time of receipt of the instruction (110) to which the instruction notification (70) relates;
creating a notional instruction in respect of the instruction notification (70);
calculating, based on the set of pre-allocation parameters of the notional instruction, the current status of any existing instructions and notional instructions, and the state of each processing system (16A, 16B, 16C), an appropriate processing system of the plurality of processing systems (16A, 16B, 16C) to allocate the notional instruction (110) to;
storing information records relating to the allocation status of the notional instructions; and
allocating a received instruction to a processing system of the plurality of processing systems (16A, 16B, 16C) in accordance with the stored determined allocation of the notional instruction to which the instruction relates.
